# EUROPEAN PATENT APPLICATION

(11) **EP 3 779 670 A1**
(43) Date of publication of application: **17.02.2021**
(21) Application number: 19776398.0
(22) Date of filing: 29.03.2019
(51) Int. Cl.: G06F 7/523

(54) **ARITHMETIC OPERATION DEVICE AND ARITHMETIC OPERATION SYSTEM**

(30) Priority: 30.03.2018 JP 2018069568
(71) Applicant: RIKEN, Wako-shi Saitama 351-0198 (JP)
(72) Inventor: MAKINO Junichiro, Wako-shi, Saitama 351-0198 (JP); NITADORI Keigo, Wako-shi, Saitama 351-0198 (JP); TSUBOUCHI Miyuki, Wako-shi, Saitama 351-0198 (JP)
(74) Representative: Patentanwälte Olbricht Buchhold Keulertz
(86) International application number: PCT/JP2019/014330
(87) International publication number: WO 2019/189878

(57) **Abstract**

Provided is an arithmetic operation device including a multiplying section in which a plurality of multiplying units are divided and assigned to each of one or more groups such that each group includes one or more of the multiplying units according to a calculation precision mode, and each multiplying unit in each group multiplies together an individual multiplier, which is a digit range of at least a portion of a multiplier for the group, and an individual multiplicand, which is a digit range of at least a portion of a multiplicand for the group, according to the calculation precision mode, and an adding section in which a plurality of adding units are divided and assigned to each of one or more groups such that each group includes one or more of the adding units according to the calculation precision mode, and the one or more adding units assigned to each group add together each multiplication result realized by each multiplying unit assigned to the group and output a product of the multiplier and the multiplicand.

## Description

### BACKGROUND

### 1. TECHNICAL FIELD

The present invention relates to an arithmetic operation device and an arithmetic operation system, particularly to an arithmetic operation device and an arithmetic operation system for performing multiplication with variable precision.

### 2. RELATED ART

A conventional apparatus is known that performs double-precision multiplication. For example, an arithmetic operation device disclosed in Patent Document 1 includes two multiplying units 12 and 13, an ALU 37, and accumulators 24 and 25. An input section of the ALU 37 is provided with multiplication results of the multiplying units 12 and 13 and the outputs of the accumulators 24 and 25.

### [PRIOR ART DOCUMENTS]

### [PATENT DOCUMENTS]

Patent Document 1: Japanese Patent Application Publication No. H11-259273

### [PROBLEM TO BE SOLVED]

However, in the apparatus disclosed in Patent Document 1, the two multiplying units 12 and 13 use large-scale circuitry for acquiring the final multiplication results, and this causes a problem of poor power efficiency.

Furthermore, in recent years, there is a demand for an arithmetic operation device that can perform not just single-precision multiplication, but also variable-precision multiplication with small-scale circuitry.

In general, the number of transistors needed to perform single-precision multiplication is less than or equal to 1/4 the number of transistors needed to perform double-precision multiplication, and the number of transistors needed to perform half-precision multiplication is less than or equal to 1/16 the number of transistors needed to perform double-precision multiplication. Accordingly, a general arithmetic operation device that performs such switching between single-precision and double-precision, for example, includes, as the scale of the circuitry, enough transistors to be able to perform one double-precision calculation or four single-precision calculations. In such a general arithmetic operation device, the number of transistors used during the single-precision calculation is less than or equal to 1/4 the number of transistors used for the double-precision calculation. Furthermore, there is an idea to enable switching between one double-precision calculation and two single-precision calculations, but in this case, the number of transistors used during the single-precision calculation is less than or equal to 1/2 the number of transistors used for the double-precision calculation. Essentially, even though such an arithmetic operation device includes large-scale circuitry for performing the double-precision calculation, at least 3/4 or 1/2 of the transistors in the arithmetic operation device are unused when performing the single-precision calculation and go to waste.

Therefore, it is an objective of the present invention to provide an arithmetic operation device and an arithmetic operation system that can efficiently perform multiplication with each of a plurality of precisions, with small-scale circuitry.

### [GENERAL DISCLOSURE]

According to a first aspect of the present invention, provided is an arithmetic operation device for performing multiplication with variable precision. The arithmetic operation device may comprise a multiplying section that includes a plurality of multiplying units, which are divided and assigned to each of one or more groups such that each group includes one or more of the multiplying units according to a calculation precision mode, wherein each multiplying unit in each group multiplies together an individual multiplier, which is a digit range of at least a portion of a multiplier for the group, and an individual multiplicand, which is a digit range of at least a portion of a multiplicand for the group, according to the calculation precision mode. The arithmetic operation device may comprise an adding section that includes a plurality of adding units, which are divided and assigned to each of one or more groups such that each group includes one or more of the adding units according to the calculation precision mode, wherein the one or more adding units assigned to each group add together each multiplication result realized by each multiplying unit assigned to the group and output a product of the multiplier and the multiplicand. The arithmetic operation device may comprise a first connection switching unit for, for each of the one or more groups, inputting each multiplication result realized by each multiplying unit to a digit position to which the multiplication result is to be added in the one or more adding units, according to the calculation precision mode

Each of the plurality of multiplying units may multiply together the individual multiplier and the individual multiplicand, and output the multiplication result that includes sum data of each digit and carry data of each digit.

Each of the plurality of multiplying units may multiply together the individual multiplier and the individual multiplicand, which each have a 1-unit bit length, and output the multiplication result having a 2-unit bit length. Each of the plurality of adding units may add together a plurality of pieces of input data, which each have a 2-unit bit length, and output a sum having a 2-unit bit length and, according to the calculation precision mode, a carry to a high-order digit.

In at least one calculation precision mode for multiplying together the multiplier and the multiplicand that each have a unit bit length of 2 or more, for each of the one or more groups, in each cycle, the one or more multiplying units may input the individual multipliers having digit ranges overseen by respective multiplying units in the multiplier and the individual multiplicands selected 1-unit-bit-length at a time in order from the high-order digit side in each cycle in the multiplicand, and output each of the partial products of the individual multipliers and the individual multiplicands in each cycle, as the multiplication result. In each cycle, the first connection switching unit may shift each partial product output by the one or more multiplying units and input the shifted partial products to the one or more adding units to be added to an intermediate result such that the partial product of the individual multiplier of the digit range on the lowest-order side in the multiplier and the individual multiplicand corresponds to the lowest-order digit range in the one or more adding units. The arithmetic operation device may further comprise a second connection switching unit for, for each of the one or more groups, in each cycle, shifting the intermediate result by 1 unit bit length toward a high-order side and inputting the shifted intermediate result to the one or more adding units.

In at least one calculation precision mode for unit bit lengths of 2 or more, the plurality of multiplying units and the plurality of adding units may be assigned to two or more groups. The arithmetic operation device, for each of the two or more groups, may calculate a product of the multiplier and the multiplicand using a plurality of cycles.

In a calculation precision mode for multiplying together the multiplier and the multiplicand that each have a 1-unit bit length, the plurality of multiplying units may be assigned to the plurality of groups such that each group includes one multiplying unit, and the multiplying unit assigned to each group may multiply together the multiplier and the multiplicand that each have a 1-unit bit length assigned to the group.

The adding section may include a plurality of intermediate registers that are provided corresponding respectively to the plurality of adding units and each hold a digit range corresponding to the respective adding unit in the intermediate result.

Each of the plurality of adding units may include a first adding element for outputting an addition result that includes sum data of each digit and carry data of each digit. Each of the plurality of intermediate registers may hold the sum data and the carry data of a digit range output by the corresponding first adding element in the intermediate result. The adding section may further include a plurality of second adding elements, which are provided corresponding respectively to the plurality of adding units and are divided and assigned to each of the one or more groups such that each group includes one or more second adding elements according to the calculation precision mode, for adding together the sum data and the carry data output by the one or more first adding elements in each group and outputting the addition result as a product of the multiplier and the multiplicand.

According to a second aspect of the present invention, provided is an arithmetic operation device for performing multiplication with variable precision. The arithmetic operation device may comprise a multiplying section that includes a plurality of multiplying units that are each for multiplying together two numbers that each have a 1-unit bit length and outputting a multiplication result that includes sum data of each digit and carry data of each digit. The arithmetic operation device may comprise an adding section that includes a plurality of adding units that are each for adding together at least two pieces of input data including the multiplication result realized by at least one multiplying unit among the plurality of multiplying units. The arithmetic operation device may comprise a mode selecting section for, according to the calculation precision mode, selecting a number of division for dividing the plurality of multiplying units and the plurality of adding units into in each group, each group including one or more multiplying units and one or more adding units and multiplies together a different multiplier and multiplicand and selecting the number of cycles used to multiply together the multiplier and the multiplicand using the one or more multiplying units and the one or more adding units in the group.

The mode selecting section, in a calculation precision mode for multiplying together the multiplier and the multiplicand that each have an n-bit unit length (n is a natural number), may divide the plurality of multiplying units and the plurality of adding units into at least one of the groups that each include n multiplying units and n adding units. The n multiplying units in each of the at least one group may multiply together each of n individual multipliers, which have a digit range of 1 unit bit length included in the multiplier of each group, and each of n individual multiplicands, which each have a digit range of 1 unit bit length included in the multiplicand, n sets of an individual multiplier and an individual multiplicand per cycle over n cycles. The n adding units in each of the at least one group may be combined to, over n cycles, continuously add each multiplication result from the n multiplying units of the same group in each cycle to a digit position corresponding to each multiplication result in an intermediate result of the multiplier and the multiplicand.

According to a third aspect of the present invention, provided is an arithmetic operation device for performing multiplication with variable precision, comprising a plurality of multiplying units that are each configured to output a sum signal and a carry signal that are one stage before a multiplication result of two pieces of input data; a plurality of adding units; a plurality of registers that are each configured to hold an addition result of a corresponding adding unit; a plurality of output terminals; a first switching unit that is configured to, according to a calculation precision mode, switch an output destination of a plurality of pieces of data each having a 1-unit bit length, which form a plurality of sum signals and a plurality of carry signals output from the plurality of multiplying units, to any of a plurality of bit positions of a plurality of inputs of the plurality of adding units; and a second switching unit that is configured to, according to the calculation precision mode, switch an output destination of a plurality of pieces of data each having a 1-unit bit length, which form a plurality of addition results held in the plurality of registers, to any of a plurality of bit positions of the plurality of inputs of the plurality of adding units, or switches the output destination of the plurality of addition results held in the registers to any of the plurality of output terminals.

According to a fourth aspect of the present invention, provided is an arithmetic operation device for performing multiplication with variable precision, comprising a first multiplying unit configured to output a first sum signal and a first carry signal, each having a 2-unit bit length, that are one stage before a multiplication result of two pieces of data that each have a 1-unit bit length; a second multiplying unit that is configured to output a second sum signal and a second carry signal, each having a 2-unit bit length, that are one stage before a multiplication result of two pieces of data that each have a 1-unit bit length; first and second adding units that are each configured to perform addition of a plurality of pieces of data that each have a 2-unit bit length; first and second registers that are configured to hold each of a first addition result of the first adding unit and a second addition result of the second adding unit; first and second output terminals; a first connection switching unit that is configured to, according to a calculation precision mode, switch output destinations of a plurality of pieces of data each having a 1-unit bit length, which form each of the first sum signal and the first carry signal output from the first multiplying unit and the second sum signal and the second carry signal output from the second multiplying unit, to any of a plurality of bit positions of a plurality of inputs of the first adding unit and the second adding unit; and a second connection switching unit that is configured to, according to the calculation precision mode, switch output destinations of a plurality of pieces of data each having a 1-unit bit length, which form each of the first addition result in the first register and the second addition result in the second register, to any of a plurality of bit positions of a plurality of inputs of the first adding unit and the second adding unit, or switch the output destination of the first addition result in the first register to the first output terminal and switch the output destination of the second addition result in the second register to the second output terminal.

According to a fifth aspect of the present invention, provided is an arithmetic operation device for performing multiplication with variable precision, comprising a plurality of multiplying units that each output a sum signal and a carry signal that are one stage before a multiplication result of two pieces of input data; a plurality of first-stage adding units that are each configured to output a first-stage sum signal and a first-stage carry signal of an addition result; a plurality of sum-signal hold registers that are each configured to hold the sum signal output from the corresponding first-stage adding unit; a plurality of carry-signal hold registers that are each configured to hold the carry signal output from the corresponding first-stage adding unit; a plurality of second-stage adding units that are each configured to add together a sum signal and a carry signal input thereto; a first connection switching unit that is configured to, according to a calculation precision mode, switch output destinations of a plurality of pieces of data each having a 1-unit bit length, which form the plurality of sum signals and carry signals output from the plurality of multiplying units, to any of a plurality of bit positions of a plurality of inputs of the plurality of first-stage adding units, or switch output destinations of the plurality of sum signals and carry signals output from the plurality of multiplying units, to any of the plurality of inputs of the plurality of second-stage adding units; and a second connection switching unit that is configured to, according to the calculation precision mode, switch output destinations of a plurality of pieces of data each having a 1-unit bit length, which form the plurality of sum signals held in the plurality of sum-signal hold registers, and a plurality of pieces of data each having a 1-unit bit length, which form the plurality of carry signals held in the plurality of carry-signal hold registers, to any of a plurality of bit positions of the plurality of inputs of the plurality of first-stage adding units, or switch the plurality of sum signals held in the plurality of sum-signal hold registers and the plurality of carry signals held in the plurality of carry-signal hold registers to any of the plurality of inputs of the plurality of second-stage adding units.

According to a sixth aspect of the present invention, provided is an arithmetic operation device for performing multiplication with variable precision, comprising a first multiplying unit configured to output a first sum signal and a first carry signal, each having a 2-unit bit length, that are one stage before a multiplication result of two pieces of data each having a 1-unit bit length; a second multiplying unit configured to output a second sum signal and a second carry signal, each having a 2-unit bit length, that are one stage before a multiplication result of two pieces of data each having a 1-unit bit length; a first adding unit configured to output a third sum signal and a third carry signal that are one stage before an addition result of a plurality of pieces of data that each have a 2-unit bit length; a second adding unit configured to output a fourth sum signal and a fourth carry signal that are one stage before an addition result of a plurality of pieces of data that each have a 2-unit bit length; first to fourth registers that are configured to hold each of the third sum signal, the third carry signal, the fourth sum signal, and the fourth carry signal; third and fourth adding units that are configured to add together add together each of a sum signal and a carry signal input thereto; first and second output terminals that output each of an addition result of the third adding unit and an addition result of the fourth adding unit; a first connection switching unit that is configured to, according to a calculation precision mode, switch output destinations of a plurality of pieces of data each having a 1-unit bit length, which form each of the first sum signal and the first carry signal output from the first multiplying unit and the second sum signal and the second carry signal output from the second multiplying unit, to any of a plurality of bit positions of a plurality of a plurality of inputs of the first adding unit and the second adding unit, or output the first sum signal and the first carry signal to the third adding unit and output the second sum signal and the second carry signal to the fourth adding unit; and a second connection switching unit that is configured to, according to the calculation precision mode, switch output destinations of a plurality of pieces of data each having a 1-unit bit length, which form each of the third sum signal in the first register, the third carry signal in the second register, the fourth sum signal in the third register, and the fourth carry signal in the fourth register, to any of a plurality of bit positions of the plurality of inputs of the first adding unit and the second adding unit, or output the third sum signal in the first register and the third carry signal in the second register to the third adding signal and output the fourth sum signal in the third register and the fourth carry signal in the fourth register to the fourth adding unit.

According to a seventh aspect of the present invention, provided is an arithmetic operation device for performing multiplication with variable precision, comprising a first multiplying unit configured to output a first sum signal and a first carry signal, each having a 2-unit bit length, that are one stage before a multiplication result of two pieces of data each having a 1-unit bit length; a second multiplying unit configured to output a second sum signal and a second carry signal, each having a 2-unit bit length, that are one stage before a multiplication result of two pieces of data each having a 1-unit bit length; a third multiplying unit configured to output a third sum signal and a third carry signal, each having a 2-unit bit length, that are one stage before a multiplication result of two pieces of data each having a 1-unit bit length; a fourth multiplying unit configured to output a fourth sum signal and a fourth carry signal, each having a 2-unit bit length, that are one stage before a multiplication result of two pieces of data each having a 1-unit bit length; first to fourth adding units that are each configured to perform addition of a plurality of pieces of data that each have a 2-unit bit length; first to fourth registers that are configured to hold each of a first addition result of the first adding unit, a second addition result of second first adding unit, a third addition result of the third adding unit, and a fourth addition result of the fourth adding unit; first to fourth output terminals; a first connection switching unit that is configured to, according to a calculation precision mode, switch output destinations of a plurality of pieces of data each having a 1-unit bit length, which form each of the first sum signal and the first carry signal output from the first multiplying unit, the second sum signal and the second carry signal output from the second multiplying unit, the third sum signal and the third carry signal output from the third multiplying unit, and the fourth sum signal and the fourth carry signal output from the fourth multiplying unit, to any of a plurality of bit positions of a plurality of a plurality of inputs of the first adding unit, the second adding unit, the third adding unit, and the fourth adding unit; and a second connection switching unit that is configured to, according to the calculation precision mode, switch output destinations of a plurality of pieces of data each having a 1-unit bit length, which form each of the first addition result in the first register, the second addition result in the second register, the third addition result in the third register, and the fourth addition result in the fourth register, to any of a plurality of bit positions of the plurality of inputs of the first adding unit, the second adding unit, the third adding unit, and the fourth adding unit, or switch the output destination of the first addition result in the first register to the first output terminal, switch the output destination of the second addition result in the second register to the second output terminal, switch the output destination of the third addition result in the third register to the third output terminal, and switch the output destination of the fourth addition result in the fourth register to the fourth output terminal.

According to an eighth aspect of the present invention, provided is an arithmetic operation device for performing multiplication with variable precision, comprising a first multiplying unit configured to output a first sum signal and a first carry signal, each having a 2-unit bit length, that are one stage before a multiplication result of two pieces of data each having a 1-unit bit length; a second multiplying unit configured to output a second sum signal and a second carry signal, each having a 2-unit bit length, that are one stage before a multiplication result of two pieces of data each having a 1-unit bit length; a third multiplying unit configured to output a third sum signal and a third carry signal, each having a 2-unit bit length, that are one stage before a multiplication result of two pieces of data each having a 1-unit bit length; a fourth multiplying unit configured to output a fourth sum signal and a fourth carry signal, each having a 2-unit bit length, that are one stage before a multiplication result of two pieces of data each having a 1-unit bit length; a first adding unit that is configured to output a fifth sum signal and a fifth carry signal that are one stage before an addition result of a plurality of pieces of data that each have a 2-unit bit length, a second adding unit that is configured to output a sixth sum signal and a sixth carry signal that are one stage before an addition result of a plurality of pieces of data that each have a 2-unit bit length, a third adding unit that is configured to output a seventh sum signal and a seventh carry signal that are one stage before an addition result of a plurality of pieces of data that each have a 2-unit bit length, and a fourth adding unit that is configured to output an eighth sum signal and a n eighth carry signal that are one stage before an addition result of a plurality of pieces of data that each have a 2-unit bit length; first to eighth registers that are configured to hold each of the fifth sum signal, the fifth carry signal, the sixth sum signal, the sixth carry signal, the seventh sum signal, the seventh carry signal, the eighth sum signal, and the eighth carry signal; fifth to eighth adding units each configured to add together a sum signal and a carry signal input thereto; first to fourth output terminals that output each of an addition result of the fifth adding unit, an addition result of the sixth adding unit, an addition result of the seventh adding unit, an addition result of the eighth adding unit; a first connection switching unit that is configured to, according to a calculation precision mode, switch output destinations of a plurality of pieces of data each having a 1-unit bit length, which form each of the first sum signal and the first carry signal output from the first multiplying unit, the second sum signal and the second carry signal output from the second multiplying unit, the third sum signal and the third carry signal output from the third multiplying unit, and the fourth sum signal and the fourth carry signal output from the fourth multiplying unit, to any of a plurality of bit positions of a plurality of a plurality of inputs of the first adding unit, the second adding unit, the third adding unit, and the fourth adding unit, or outputs the first sum signal and the first carry signal to the fifth adding unit, outputs the second sum signal and the second carry signal to the sixth adding unit, outputs the third sum signal and the third carry signal to the seventh adding unit, and outputs the fourth sum signal and the fourth carry signal to the eighth adding unit; and a second connection switching unit that is configured to, according to the calculation precision mode, switch output destinations of a plurality of pieces of data each having a 1-unit bit length, which form each of the fifth sum signal in the first register, the fifth carry signal in the second register, the sixth sum signal in the third register, the sixth carry signal in the fourth register, the seventh sum signal in the fifth register, the seventh carry signal in the sixth register, the eighth sum signal in the seventh register, and the eighth carry signal in the eighth register, to any of a plurality of bit positions of the plurality of inputs of the first adding unit, the second adding unit, the third adding unit, and the fourth adding unit, or output the fifth sum signal in the first register and the fifth carry signal in the second register to the fifth adding unit, output the sixth sum signal in the third register and the sixth carry signal in the fourth register to the sixth adding unit, output the seventh sum signal in the fifth register and the seventh carry signal in the sixth register to the seventh adding unit, and output the eighth sum signal in the seventh register and the eighth carry signal in the eighth register to the eighth adding unit.

According to a ninth aspect of the present invention, provided is an arithmetic operation system comprising an arithmetic operation unit that includes a plurality of arithmetic operation devices, each arithmetic operation device being the arithmetic operation device described above, and a plurality of processors that share the arithmetic operation unit.

### BRIEF DESCRIPTION OF THE DRAWINGS

Fig. 1 shows a configuration of an arithmetic operation device 405 according to the present embodiment.
Fig. 2 shows a calculation of the arithmetic operation device 405 according to the present embodiment in the half-precision calculation mode.
Fig. 3 shows the multiplication of a multiplier A1 and a multiplicand B1 with single-precision.
Fig. 4 shows a calculation of the arithmetic operation device 405 according to the present embodiment in the single-precision calculation mode.
Fig. 5 shows the multiplication of a multiplier A1 and a multiplicand B1 with double-precision.
Fig. 6 shows a configuration of an adding unit 540 and an intermediate register 550 according to a first modification of the present embodiment.
Fig. 7 shows a configuration of an arithmetic operation device 1 of the second modification.
Fig. 8 shows i-th multipliers Ai, i-th multiplicands Bi, and i-th products Ci (i = 1-4) in the half-precision calculation mode.
Fig. 9 shows the operation of the arithmetic operation device 1 according to the second modification in the half-precision calculation mode.
Fig. 10 shows the inputs and output of the adding unit 4a in the half-precision calculation mode of the second modification.
Fig. 11 shows i-th multipliers Ai, i-th multiplicands Bi, and i-th products Ci (i = 1, 2) in the single-precision calculation mode.
Fig. 12 shows an operation of the arithmetic operation device 1 of the second modification in the single-precision calculation mode.
Fig. 13 shows inputs and outputs of the adding units 4a and 4b in the first cycle, in the single-precision calculation mode of the second modification.
Fig. 14 shows inputs and outputs of the adding units 4a and 4b in the second cycle, in the single-precision calculation mode of the second modification.
Fig. 15 shows a multiplier A1, a multiplicand B1, and a product C1 in the double-precision calculation mode.
Fig. 16 shows an operation of the arithmetic operation device 1 of the second modification in the double-precision calculation mode.
Fig. 17 shows the inputs and outputs of the adding units 4a to 4d in the first cycle, in the double-precision calculation mode of the second modification.
Fig. 18 shows the inputs and outputs of the adding units 4a to 4d in the second cycle, in the double-precision calculation mode of the second modification.
Fig. 19 shows a configuration of the Wallace tree multiplying unit 2a.
Fig. 20 shows data generated by the Wallace tree multiplying unit 2a.
Fig. 21 shows a configuration of an arithmetic operation device 101 of a third modification of the present embodiment.
Fig. 22 describes the operation of the arithmetic operation device 101 of the third modification in the half-precision mode.
Fig. 23 shows the inputs and outputs of the adding unit 16a in the in the half-precision calculation mode of the third modification.
Fig. 24 shows the operation of the arithmetic operation device 101 of the third modification in the single-precision calculation mode.
Fig. 25 shows the inputs and outputs of the adding units 14a and 14b in the first cycle, in the single-precision calculation mode of the third modification.
Fig. 26 shows the inputs and outputs of the adding units 14a and 14b in the second cycle, in the single-precision mode of the third modification.
Fig. 27 shows the operation of the arithmetic operation device 101 of the third modification in the double-precision calculation mode.
Fig. 28A shows the inputs and outputs of the adding units 14a and 14b in the first cycle, in the double-precision calculation mode of the third modification.
Fig. 28B shows the inputs and outputs of the adding units 14c and 14d in the first cycle, in the double-precision calculation mode of the third modification.
Fig. 29A shows the inputs and outputs of the adding units 14a and 14b in the second cycle, in the double-precision calculation mode of the third modification.
Fig. 29B shows the inputs and outputs of the adding units 14c and 14d in the second cycle, in the double-precision calculation mode of the third modification.
Fig. 30 shows a configuration of an adding unit 200 that performs carry-signal hold addition using two CSAs.
Fig. 31 shows input data, intermediate data, and output data of the adding unit 200.
Fig. 32 shows a configuration of an adding unit 300 that performs carry-signal hold addition using four CSAs.
Fig. 33 shows input data, intermediate data, and output data of the adding unit 300.
Fig. 34 shows a configuration of an adding unit 400 that performs carry-signal hold addition using eight CSAs.
Fig. 35 shows a configuration of an arithmetic operation system 1000 of a fourth modification of the present embodiment.

### DESCRIPTION OF EXEMPLARY EMBODIMENTS

Hereinafter, some embodiments of the present invention will be described, but the embodiments do not limit the invention according to the claims. Furthermore, all the combinations of the features described in the embodiments are not necessarily essential to means provided by aspects of the invention.

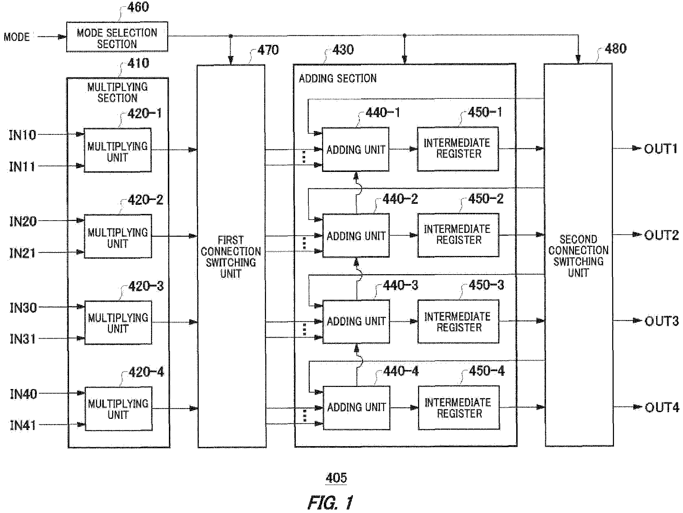

Fig. 1 shows a configuration of an arithmetic operation device 405 according to the present embodiment. The arithmetic operation device 405 performs variable-precision multiplication. In the present embodiment, as an example, the arithmetic operation device 405 has three calculation precision modes, which are a half-precision calculation mode for multiplying together a half-precision multiplier and a multiplicand that are 13 bits, for example, a single-precision calculation mode for multiplying together a single-precision multiplier and a multiplicand that are 26 bits, for example, and a double-precision calculation mode for multiplying for multiplying together a double-precision multiplier and a multiplicand that are 52 bits, for example. For the sake of convenience in the description, the two numbers being multiplied together are referred to as a "multiplier" and a "multiplicand", but there is no substantial difference between these numbers. Accordingly, a configuration in which the terms "multiplier" and "multiplicand" recorded in the Claims and Specification and the like are switched also falls within the technical scope of the invention according to the Claims and is also disclosed in the Specification and the like.

Here, when a bit length (e.g. 13 bits) used to express a half-precision number is expressed as a "1-unit bit length", a single-precision number has a 2-unit bit length and a double-precision number has a 4-unit bit length. Considering that the multiplication of a multiplier by a multiplicand is a calculation for obtaining the final product by adding each multiplication result obtained by multiplying together the digits for all combinations of each digit of the multiplier and each digit of the multiplicand to an appropriate digit position, multiplying together half-precision numbers involves multiplying together 1-unit-bit-length numbers one time, multiplying together single-precision numbers involves multiplying together 1-unit-bit-length numbers four times (2x2), and multiplying together double-precision numbers involves multiplying together 1-unit-bit-length numbers 16 times (4x4). Therefore, multiplying together n-unit-bit-length numbers involves multiplying together 1-unit-bit-length numbers n×n times. The 1-unit bit length may be any length in accordance with the design of the arithmetic operation device 405.

In the arithmetic operation device 405 according to the present embodiment, the plurality of multiplying units of the arithmetic operation device 405 are effectively used in each of the half-precision calculation mode, the single-precision calculation mode, and the double-precision calculation mode.

The arithmetic operation device 405 includes a multiplying section 410, an adding section 430, a mode selecting section 460, a first connection switching unit 470, and a second connection switching unit 480. The multiplying section 410 includes a plurality of multiplying units 420, which are four multiplying units 420-1 to 420-4 in the present embodiment, for example. The plurality of multiplying units 420 are respectively input two numbers that have a 1-unit bit length, multiply these numbers together, and output the multiplication result. Each multiplying unit 420-i (i = 1, 2, 3, 4) receives pieces of input data INi0 and INi1 that each have a 1-unit bit length, and outputs a multiplication result that has a 2-unit bit length.

The adding section 430 includes a plurality of adding units 440 and a plurality of intermediate registers 450. In the present embodiment, the adding section 430 includes four adding units 440-1 to 440-4 and four intermediate registers 450-1 to 450-4, as an example.

The plurality of adding units 440 each add together at least two pieces of input data including a multiplication result obtained by at least one multiplying unit 420 among the plurality of multiplying units 420-1 to 420-4. Each adding unit 440-i (i = 1, 2, 3, 4) adds together a plurality of pieces of input data that each have a 2-unit bit length, and outputs the resulting sum that has a 2-unit bit length and, according to the calculation precision mode, the carry to a high-order digit. Here, the number of adding units 440 provided may be the same as the number of multiplying units 420 provided, and each adding unit 440 may be capable of receiving input data having the same bit length (e.g. 2-unit bit length) as the output data of each multiplying unit 420.

The plurality of intermediate registers 450-i (i = 1, 2, 3, 4) are respectively provided corresponding to each of the plurality of adding units 440-1 to 440-4. Each intermediate register 450 holds the addition result output by the corresponding adding unit 440.

The mode selecting section 460 inputs the calculation precision mode in which the arithmetic operation device 405 is to operate, and controls each section of the arithmetic operation device 405 according to the calculation precision mode. Here, the mode selecting section 460 may receive a designation of the calculation precision mode from a processor or the like connected to the arithmetic operation device 405 and dynamically control each section of the arithmetic operation device 405 to operate in the designated calculation precision mode, or may receive a calculation precision mode set in a setting register or the like and control each section of the arithmetic operation device 405 to operate fixed in the calculation precision mode.

The mode selecting section 460 selects the number of divisions for dividing the plurality of multiplying units 420 and the plurality of adding units 440 into groups that each include one or more multiplying units 420 and one or more adding units 440, according to the calculation precision mode. These one or more groups are used to multiply together multipliers and multiplicands that are different from each other. By being divided into such groups, the plurality of multiplying units 420 are divided into each one or more multiplying units 420 and assigned to each of the one or more groups, according to the calculation precision mode. In each group, each multiplying unit 420 multiplies an individual multiplier, which is a digit range (e.g. a digit range of 1-unit bit length) of at least a portion of the multiplier for this group, and an individual multiplicand, which is a digit range (e.g. a digit range of 1-unit bit length) of at least a portion of the multiplicand for this group, according to the calculation precision mode.

Furthermore, the mode selecting section 460 selects the number of cycles to be used to multiply together the multiplier and the multiplicand using the one or more multiplying units 420 and the one or more adding units 440 in the group, according to the calculation precision mode. Here, by being divided into groups as described above, the plurality of adding units 440 are divided into each one or more adding units 440 and assigned to each group of the one or more groups, according to the calculation precision mode. The one or more adding units 440 assigned to each group add together each multiplication results obtained by each multiplying unit 420 assigned to this group. The one or more adding units 440 assigned to each group continuously add together each multiplication result during the number of cycles selected according to the calculation precision mode. The one or more intermediate registers 450 corresponding to the one or more adding units 440 in each group respectively hold the digit range corresponding to the corresponding adding unit 440, in an intermediate result that is an addition result of each cycle. In this way, the one or more adding units 440 assigned to each group ultimately acquire the product of the multiplier and the multiplicand, and output the product.

In the half-precision calculation mode, the mode selecting section 460 according to the present embodiment divides the four multiplying units 420 and the four adding units 440 into four groups that each include one multiplying unit 420 and one adding unit 440, and performs the multiplication of multipliers and multiplicands in four sets that can be different from each other, in parallel in the four groups.

In the single-precision calculation mode, the mode selecting section 460 divides the four multiplying units 420 and the four adding units 440 into two groups that each include two multiplying units 420 and two adding units 440, and performs the multiplication of multipliers and multiplicands in two sets that can be different from each other, in parallel in the two groups. In this case, each group is capable of performing single-precision multiplication in which multiplication of 1-unit bit lengths is performed four times using two cycles, by performing two multiplication of 1 unit bit length in one cycle.

Furthermore, in the double-precision calculation mode, the mode selecting section 460 assigns the four multiplying units 420 and four adding units 440 to one group, and performs the multiplication of one set of a multiplier and a multiplicand in the one group. In this case, the group is capable of performing double-precision multiplication in which multiplication of 1-unit bit lengths is performed 16 times using four cycles, by performing four multiplication of 1 unit bit length in one cycle.

The first connection switching unit 470 is controlled by the mode selecting section 460 to switch which digit position, in each piece of input data of each adding unit 440, each multiplication result output by each multiplying unit 420 is transmitted to, according to the calculation precision mode. For each of the one or more groups, the first connection switching unit 470 causes each multiplication result obtained by each multiplying unit 420 to be input to a digit position to which this multiplication result is to be added in the one or more adding units 440 in the group, according to the calculation precision mode.

The second connection switching unit 480 is controlled by the mode selecting section 460 to, for each of the one or more groups, in each cycle, shift the intermediate result held in the two or more intermediate registers 450 in the group and input the intermediate result to the two or more adding units 440 in the group, according to the calculation precision mode. In this way, for each group, the arithmetic operation device 405 calculates the multiplication result of each multiplying unit 420 from the high-order side (or low-order side) to the low-order side (or high-order side) for each cycle, adds the multiplication result of each multiplying unit 420 in each cycle to the low-order side (or high-order side) of the intermediate result of the group, and continuously shifts the intermediate result to the high-order side (or low-order side) in the next cycle, thereby being able to add each multiplication result to a suitable position in the product of the multiplier and the multiplicand.

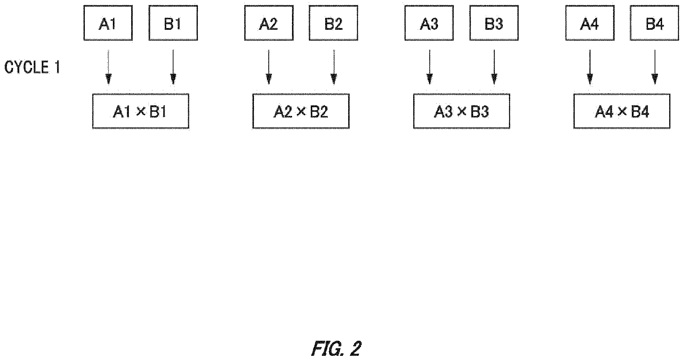

Fig. 2 shows a calculation of the arithmetic operation device 405 in the half-precision calculation mode according to the present embodiment. In the half-precision calculation mode, the arithmetic operation device 405 multiplies together four sets of the multipliers Ai and multiplicands Bi (i = 1, 2, 3, 4), each of which are half precision, i.e. with a 1-unit bit length, and outputs four sets of a product Ci in one cycle.

In the half-precision calculation mode, the plurality of multiplying units 420 are assigned respectively to the plurality of groups, the each group including one multiplying unit 420. In the present embodiment, a multiplying unit 420-i (i = 1, 2, 3, 4) is assigned to each of the four groups one by one. Each multiplying unit 420-i receives the multiplier Ai and the multiplicand Bi having a 1-unit bit length assigned to the group, as the pieces of input data INi0 and INi1, multiplies Ai and Bi together, and outputs the product Ci having a 2-unit bit length.

In the half-precision calculation mode, the first connection switching unit 470 inputs the products Ci, which are the multiplication results of each of the multiplying units 420-i, respectively into the adding units 440-i corresponding to each of the multiplying units 420-i. Each adding unit 440-i inputs a value of 0 as another piece of input data and adds the value of 0 to the product Ci, for example, thereby storing the product Ci in the corresponding intermediate register 450-i without changing. The second connection switching unit 480 outputs the product Ci stored in each intermediate register 450-i as a final multiplication result OUTi.

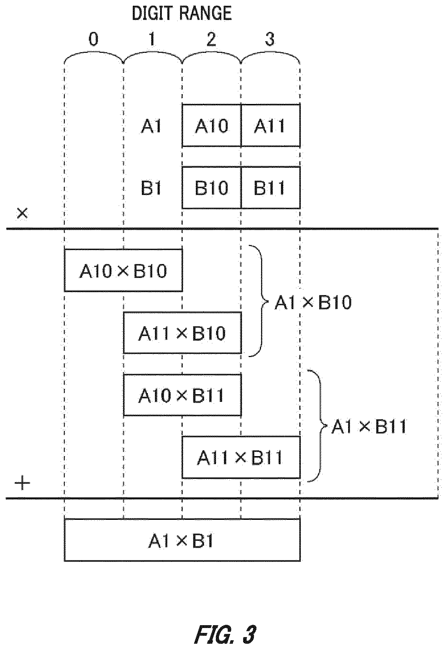

Fig. 3 shows the multiplication of a multiplier A1 and a multiplicand B1 that each have a 2-unit bit length, i.e. single-precision multiplication. The multiplier A1 can be divided into an individual multiplier A10 on the high-order side and an individual multiplier A11 on the low-order side, each of which has digit range of 1-unit bit length. Similarly, the multiplicand B1 can be divided into an individual multiplicand B10 on the high-order side and an individual multiplicand B11 on the low-order side. Here, the individual multipliers and the individual multiplicands are numbers obtained by dividing the multiplier and the multiplicand into each digit range having bit length capable of being input to each multiplying unit 420.

The multiplication result of the multiplier A1 and the multiplicand B1 can be calculated by adding each of four multiplication results, which are the multiplication result of A10 and B10, the multiplication result of A11 and B10, the multiplication result of A10 and B11, and the multiplication result of A11 and B11, at suitable digit positions as shown in the drawing.

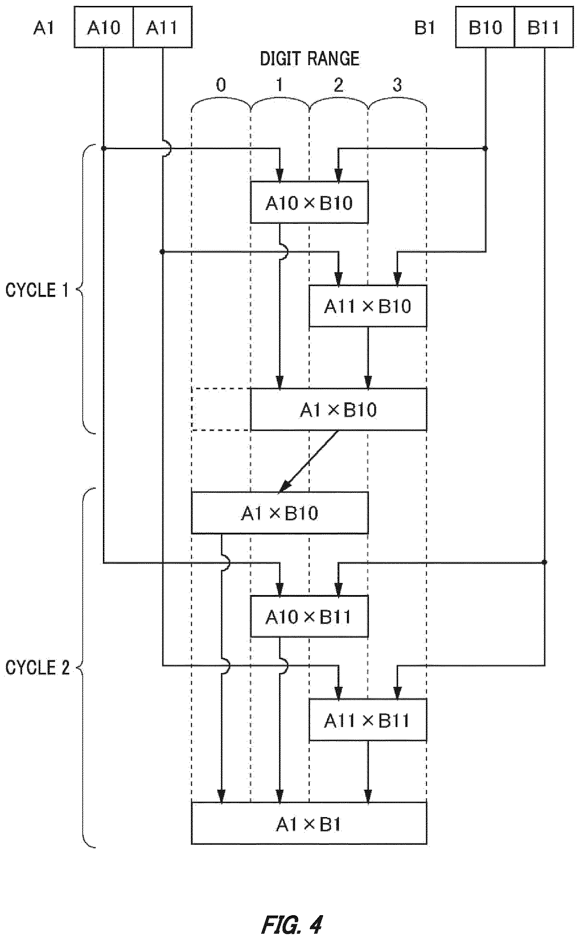

Fig. 4 shows a calculation of the arithmetic operation device 405 in the single-precision calculation mode according to the present embodiment. In the single-precision calculation mode, the arithmetic operation device 405 multiplies together two sets of the multipliers Ai and multiplicands Bi (i = 1, 2,) in parallel, each of which are single-precision, i.e. with a 2-unit bit length, and outputs two sets of a product Ci in two cycle.

In the single-precision calculation mode, the plurality of multiplying units 420 and the adding units 440 are assigned to a plurality of groups, the each group including two multiplying units 420 and two adding units 440. In the present embodiment, the multiplying units 420-1 and 420-2 and the adding units 440-1 and 440-2 are assigned to a first group, and the multiplying units 420-3 and 420-4 and the adding units 440-3 and 440-4 are assigned to a second group. The arithmetic operation device 405 inputs the multiplier Ai and the multiplicand Bi that each have a 2-unit bit length for the i-th group, multiplies Ai by Bi, and outputs the product Ci having a 4-unit bit length for the i-th group. The operations of the first group and the second group are the same except for having different assigned multiplying units 420, adding units 440, and intermediate registers 450, and therefore the description below focuses on the first group.

In the single-precision calculation mode, the arithmetic operation device 405 realizes the multiplication method shown in Fig. 3 in each group in two cycles. In the first cycle, the arithmetic operation device 405 multiplies each of the individual multipliers A10 and A11 by the individual multiplicand B10, and performs the accompanying addition.

In the first cycle, the multiplying unit 420-1 inputs A10 to the input IN10 and inputs B10 to the input IN11, and outputs a partial product A10×B10 that is the product of these inputs. The multiplying unit 420-2 inputs A11 to the input IN20 and B10 to the input IN21, and outputs a partial product A11×B10 that is the product of these inputs.

The adding unit 440-1 and the adding unit 440-2 are combined to function as an adding unit having a 4-unit bit length (shown as "adding unit Q"). The carry from the adding unit 440-2 to the adding unit 440-1 in the 4-unit-bit-length addition may be generated by a carry-lookahead circuit or the like, for example, and may be supplied to the adding unit 440-1. The first connection switching unit 470 shifts the partial product A10×B10 and the partial product A11×B10 and inputs these shifted partial products to the adding unit Q, such that the partial product A11×B10 that is on the lowest-order side among the partial product A10×B10 and the partial product A11×B10 corresponds to the digit range on the lowest-order side of the adding unit Q. In other words, the first connection switching unit 470 shifts the partial product A11×B10 into the digit range shown in Figs. 2 and 3, and inputs the shifted partial product to the adding unit Q. Since the partial product A10×B10 is positioned closer to the high-order side by 1 unit bit length from the partial product A11×B10, the first connection switching unit 470 shifts the partial product A10×B10 into the digit range shown in Figs. 1 and 2, and inputs the shifted partial product to the adding unit Q. As a result, the adding unit Q respectively inputs and adds the digit range of a low-order 1-unit-bit-length of the partial product A11×B10 to the digit range 3 of the lowest-order 1-unit bit length, inputs and adds the digit range of a low-order 1-unit-bit-length of the partial product A10×B10 and the digit range of a high-order 1-unit-bit-length of the partial product A11×B10 to the digit range 2 that is closer to the high-order side by 1-unit bit length from the lowest order, and inputs and adds the digit range of a high-order 1-unit-bit-length of the partial product A10×B10 to the digit range 1 that is closer to the high-order side by 2 unit bit lengths from the lowest order, and outputs an intermediate result in which the digit ranges 1 to 3 are the partial product A1×B10, which is the product of the multiplier A1 and the individual multiplicand B10. The adding unit Q stores this partial product A1×B10 in the intermediate registers 450-1 and 450-2.

In the second cycle, the second connection switching unit 480 shifts the partial product A1×B10, which is the intermediate result stored in the intermediate registers 450-1 and 450-2, by 1 unit bit length toward the high-order side, and supplies the shifted partial product to the adding unit Q. The multiplying units 420-1 and 420-2 and the first connection switching unit 470 calculate the partial product A10×B11 and the partial product A11×B11 in the same manner as in the first cycle, and inputs these partial products to the adding unit Q such that the partial product A11×B11 that is on the lowest-order side corresponds to the lowest-order-side digit range of the adding unit Q. The adding unit Q inputs and adds together the partial product A1×B10 shifted by the second connection switching unit 480 and the partial products A10×B11 and A11×B11 calculated in the second cycle, in a state where the digit ranges have the correct correspondence, and outputs the product A1×B1 = C1. The intermediate registers 450-1 and 450-2 hold the product C1, and the second connection switching unit 480 outputs the product C1 held by the intermediate registers 450-1 and 450-2 as OUT1 and OUT2 from the third cycle onward.

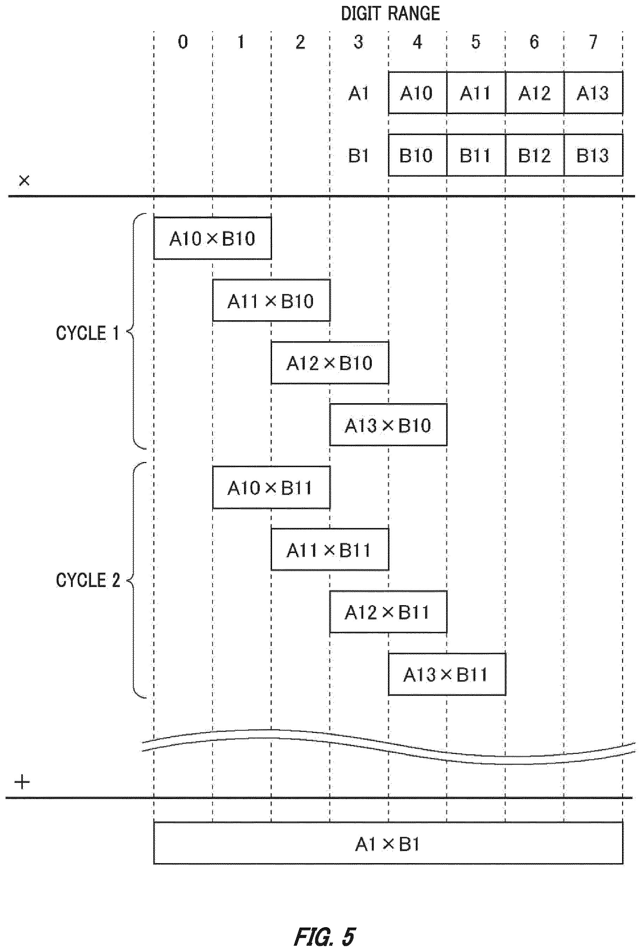

Fig. 5 shows the multiplication of a multiplier A1 and a multiplicand B1 that each have a 4-unit bit length, i.e. double-precision multiplication. The multiplier A1 is divided into individual multipliers A10 to A13 that each have a 1-unit bit length, in order from the high-order side. The multiplicand B1 is divided into individual multiplicands B10 to B13 that each have a 1-unit bit length, in order from the high-order side.

The multiplication result of the multiplier A1 and the multiplicand B1 can be calculated by adding the multiplication results of all combinations (16 sets) among the individual multipliers A10 to A13 and the individual multiplicands B10 to B13 respectively at suitable digit positions. Here, the multiplication result of an individual multiplier that is closer to the high-order side by m unit bit lengths from the lowest-order side and an individual multiplicand that is closer to the high-order side by n unit bit lengths from the lowest-order side is added to the intermediate result at a digit position that is closer to the high-order side by m+n unit bit lengths from the lowest-order side.

In the double-precision calculation mode, the arithmetic operation device 405 performs double-precision multiplication, that is, the arithmetic operation device 405 multiplies together the multiplier A1 and the multiplicand B1 which have four unit bit length in four cycles, and outputs the product C1. In the double-precision calculation mode, the plurality of multiplying units 420 and the adding units 440 are assigned to one group.

In the first cycle, the multiplying units 420-1 to 420-4 input A10 to A13 into IN10 to IN40 and B10 into each of IN11 to IN41, and output the partial products A10×B10, A11×B10, A12×B10, and A13×B10, which are the products of B10 and each of A10 to A13.

The adding units 440-1 to 440-4 are combined to function as an adding unit for 8-unit bit lengths (adding unit O). The carry from the adding unit 440-i to the adding unit 440-(i-1) in the 2-unit-bit-length addition may be generated by a carry-lookahead circuit or the like, for example, and supplied to the adding unit 440-(i-1). In the same manner as in the single-precision calculation mode, the first connection switching unit 470 shifts the partial products A10×B10 to A13×B10 and inputs these partial products to the adding unit O, such that the partial product A13×B10 on the lowest-order side among the partial products A10×B10 to A13×B10 corresponds to the digit range on the lowest-order side of the adding unit O. As a result, the adding unit O respectively inputs and adds the partial product A13×B10 to the digit ranges 6 and 7 on the lowest-order side, inputs and adds the partial product A12×B10 to the digit ranges 5 and 6 that are closer to the high-order side by 1 unit bit length from the lowest order, inputs and adds the partial product A11×B10 to the digit ranges 4 and 5 that are closer to the high-order side by 2 unit bit lengths from the lowest order, and inputs and adds the partial product A10×B10 to the digit ranges 3 and 4 that are closer to the high-order side by 3 unit bit length from the lowest order, and outputs the intermediate result in which the digit ranges 3 to 7 are the partial product A1×B10 that is the product of the multiplier A1 and the individual multiplicand B10. The adding unit O stores this partial product A1×B10 in the intermediate registers 450-1 to 450-4.

In the second cycle, the second connection switching unit 480 shifts the intermediate result stored in the intermediate registers 450-1 to 450-4 by 1 unit bit length toward the high-order side, and supplies the shifted intermediate result to the adding unit O. The multiplying units 420-1 to 420-4 and the first connection switching unit 470 calculate the partial products A10×B11 to A13×B11 in the same manner as in the first cycle, and input these partial products to the adding unit O such that the partial product A13×B11 on the lowest-order side corresponds to the lowest-order-side digit range of the adding unit O. The adding unit O inputs and adds together the partial product A1×B10 shifted by the second connection switching unit 480 and the partial products A10×B11 to A13×B11 calculated in the second cycle, in a state where the digit ranges have the correct correspondence, and outputs the intermediate result. The adding unit O stores this intermediate result in the intermediate registers 450-1 to 450-4.

In the third and fourth cycles as well, in the same manner as in the second cycle, the arithmetic operation device 405 adds together a value obtained by shifting the intermediate result stored in the intermediate registers 450-1 to 450-4 by 1 unit bit length toward the high-order side and the partial products A10×B12 to A13×B12 (in the case of the third cycle) or the partial products A10×B13 to A13×B13 (in the case of the fourth cycle), and stores this addition result in the intermediate registers 450-1 to 450-4. In this way, in the fourth cycle, the intermediate registers 450-1 to 450-4 store the product C1. The second connection switching unit 480 outputs the product C1 held in the intermediate registers 450-1 to 450-4, as OUT1 to OUT 4. from the fifth cycle onward.

As shown above, in at least one calculation precision mode for multiplying together a multiplier and a multiplicand each having 2 or more unit bit length, such as in the single-precision calculation mode and the double-precision calculation mode described above, the arithmetic operation device 405 divides the plurality of multiplying units 420, the plurality of adding units 440, and the plurality of intermediate registers 450 into one or more groups, and each group calculates the product of the multiplier and the multiplicand of the each group in parallel, using a plurality of cycles. In each group, in each cycle, the one or more multiplying units 420 input the individual multipliers of the digit ranges which are to be processed by respective multiplying unit 420 among the plurality of multipliers and the individual multiplicands selected moving by 1 unit bit length in order from the high-order digit for each cycle in the multiplicand, and each of the one or more multiplying units 420 output the partial product of the individual multiplier and the individual multiplicand in each cycle as the multiplication result. In each cycle, the first connection switching unit 470 shifts each partial product output by the one or more multiplying units 420 such that the partial product of the individual multiplier and the individual multiplicand of the lowest-order-side digit range in the multiplier corresponds to the lowest-order digit range in the one or more adding units 440, and inputs the shifted partial products to the one or more adding units 440 to be added to the intermediate result. In each cycle, the second connection switching unit 480 shifts the intermediate result by 1 unit bit length toward the high-order side, and inputs the shifted intermediate result to the one or more adding units 440-1 to 440-4.

In a calculation precision mode for a 1-unit bit length, such as the half-precision calculation mode described above, the plurality of multiplying units 420 are assigned to a plurality of groups that each include one multiplying unit 420. The arithmetic operation device 405 then calculates the product of the multiplier and the multiplicand for each of the plurality of groups, in one cycle. In this way, the arithmetic operation device 405 can effectively use the plurality of multiplying units 420 by performing individual multiplication with each of the plurality of multiplying units 420.

In at least one calculation precision mode for 2 or more unit bit length, such as the single-precision calculation mode described above, the plurality of multiplying units 420 and the plurality of adding units 440 are assigned to two or more groups. The arithmetic operation device 405 then calculates the product of the multiplier and the multiplicand for each of the two or more groups, using a plurality of cycles. In this way, the arithmetic operation device 405 can effectively utilize the plurality of multiplying units 420 even in a higher-precision calculation precision mode, by dividing the plurality of multiplying units 420 into a plurality groups and increasing the number of cycles to acquire the necessary number of multiplication results of individual multipliers and individual multiplicands.

In at least one calculation precision mode for 2 or more unit bit length, such as the double-precision calculation mode described above, the plurality of multiplying units 420 and the plurality of adding units 440 are assigned to one group. The arithmetic operation device 405 then calculates the product of the multiplier and the multiplicand in the one group, using a plurality of cycles. In this way, the arithmetic operation device 405 can effectively utilize the plurality of multiplying units 420 in an even higher-precision calculation precision mode, by assigning the plurality of multiplying units 420 to one group and increasing the number of cycles to acquire the necessary number of multiplication results of individual multipliers and individual multiplicands.

In the present embodiment, in the calculation precision mode for multiplying together a multiplier and a multiplicand that each have an n-unit bit length (n is a natural number), the mode selecting section 460 divides the plurality of multiplying units 420 and the plurality of adding units 440 into at least one group including n multiplying units 420 and n adding units 440 respectively. For example, in the half-precision calculation mode (n = 1), the mode selecting section 460 divides the total of four multiplying units 420 (and four adding units 440) into four groups that each include one multiplying unit 420 (and one adding unit 440). In the single-precision calculation mode (n = 2), the mode selecting section 460 divides the total of four multiplying units 420 and four adding units 440 into two groups that each include two multiplying units 420 and two adding units 440. In the double-precision calculation mode (n = 4), the mode selecting section 460 divides (assigns) the total of four multiplying units 420 and four adding units 440 into one group including four multiplying units 420 and four adding units 440.

Then, the n multiplying units 420 in each group multiply each of the n individual multipliers, which each have a digit range of 1 unit bit length included in the multiplier of each group, by each of the n individual multiplicands, which each have a digit range of 1 unit bit length included in the multiplicand, n sets per cycle over n cycles. The n adding units 440 in each group are combined to continuously add, over n cycles, each multiplication result from the n multiplying units 420 of the same group in each cycle to a digit position corresponding to each multiplication result in the intermediate result of the product of the multiplier and the multiplicand.

Here, in the calculation precision mode for multiplying together a multiplier and a multiplicand that each have an n-unit bit length, even when less than n multiplying units 420 are assigned to a group, the adding units 440 in the group must combine to add a 2n-unit bit length, and therefore n adding units 440 must be provided in the group in order to perform the addition in one cycle. In contrast to this, in the calculation mode for multiplying together a multiplier and a multiplicand that each have an n-unit bit length, if more than n multiplying units 420 are assigned to the group, it is enough to provide n adding units 440 in this group in order to perform the addition in one cycle, but since it is necessary to add together a greater number of multiplication results, the adding units 440 must be provided with a greater number of inputs. In contrast to this, according to the configuration of the present embodiment, in addition to effectively utilizing the plurality of multiplying units 420, it is also possible to effectively utilize the plurality of adding units 440. If effective utilization of the adding units 440 is not important, the mode selecting section 460 may perform different group divisions and perform calculation with a different number of cycles.

Furthermore, the present embodiment adopts a configuration in which the first connection switching unit 470 inputs the multiplication result from each multiplying unit 420 to a digit range on the low-order side of the one or more adding units 440, and the second connection switching unit 480 shifts the intermediate result to the high-order side. Instead, a configuration may be adopted in which the first connection switching unit 470 inputs the multiplication result from each multiplying unit 420 to a digit range on the high-order side of the one or more adding units 440, and the second connection switching unit 480 shifts the intermediate result to the low-order side. Furthermore, the arithmetic operation device 405 may adopt a configuration that does not include the second connection switching unit 480, in which case the first connection switching unit 470 may switch the connection for each cycle such that each multiplication result can be added to the corresponding digit range in the final product.

The arithmetic operation device 405 according to the present embodiment has three calculation precision modes, which are the half-precision calculation mode, the single-precision calculation mode, and the double-precision calculation mode. Instead, the arithmetic operation device 405 may have arbitrary calculation precision modes. Furthermore, the arithmetic operation device 405 includes each calculation mode corresponding to a number having a bit length that is a power of 2 multiple of 1 unit bit length. The arithmetic operation device 405 may have one or more calculation modes corresponding to a number having a bit length (e.g. a 3-unit bit length or the like) that is not a power of 2 multiple of 1 unit bit length. In such a calculation mode, the arithmetic operation device 405 may set a portion of the multiplying units 420 and the adding units 440 to an idle state. Furthermore, instead of the number of multiplying units 420, adding units 440, and intermediate registers 450 included in the arithmetic operation device 405 being a power of 2, arithmetic operation device the number of multiplying units 420, adding units 440, and intermediate registers 450 included in the arithmetic operation device 405 may be a number that is not a power of two (e.g. 6).

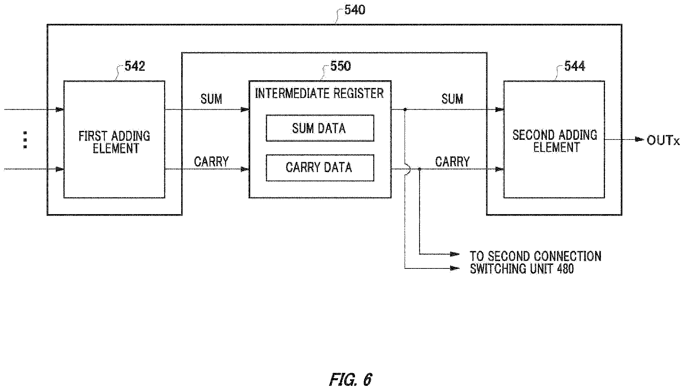

Fig. 6 shows a configuration of an adding unit 540 and an intermediate register 550 according to a first modification of the present embodiment. In the first modification, the main difference is that each adding unit 440 and each intermediate register 450 in the arithmetic operation device 405 shown in Figs. 1 to 5 are respectively changed to an adding unit 540 and an intermediate register 550, and therefore the following omits descriptions other than the points differing from the arithmetic operation device 405.

In the first modification, the addition performed by each adding unit 440 of Fig. 1 is performed by an adding unit 540 that includes a CSA (Carry Save Adder) (also referred to as a "carry hold adder").

Each adding unit 540 includes a first adding element 542 and a second adding element 544.

The first adding element 542 is a CSA that adds one or more multiplication results from the one or more multiplying units 420 input via the first connection switching unit 470 to each piece of input data in a digit range or the like corresponding to this adding unit 540 in the intermediate result input via the second connection switching unit 480, and outputs an addition result that includes sum data of each digit and carry data from each digit.

A second adding element 544 is provided corresponding to each adding unit 540. In accordance with the plurality of adding units 540 being divided into sets of one or more adding units 540 according to the calculation precision mode, the plurality of second adding elements 544 are divided into sets of one or more second adding elements 544 and assigned to each of one or more groups. The second adding element 544 adds together the sum data and the carry data output by the one or more first adding elements 542 in each group, and outputs the addition result as the product of the multiplier and the multiplicand.

More specifically, the second adding element 544 adds together the sum data and the carry data held in the intermediate register 550, and outputs the addition result as OUTx (x = 1, 2, 3, 4). The second adding element 544 is an adding unit such as a carry-lookahead adder, a carry-propagation adder, and the like that outputs a sum in which the carry is reflected by adding the carry from each digit to a high-order digit. According to the group division performed by the mode selecting section 460, a second adding element 544 receives and adds the carry from the second adding element 544 on the low-order side in the group as necessary, and propagates the carry of the addition result to the second adding element 544 on the high-order side in the group as necessary.

The intermediate register 550 holds the sum data and the carry data of the digit range output by the corresponding first adding element 542. The intermediate register 550 outputs sum data and carry data held thereof to the second adding element 544. In the present modification, the intermediate register 550 supplies sum data and carry data held thereof to one or more first adding elements 542 via the second connection switching unit 480, without passing through the second adding element 544. In this way, the arithmetic operation device 405 according to the present modification does not need to calculate a sum that reflects the carry in each cycle until the calculation of the product of the multiplier and the multiplicand finally ends, and it is therefore possible to reduce the circuit delay in the circuit that calculates the intermediate result.

Furthermore, the arithmetic operation device 405 may use, as each of the plurality of multiplying units 420, a multiplying unit using a Wallace tree, which multiplies together the individual multipliers and individual multiplicands and outputs the multiplication result including the sum data of each digit and the carry data of each digit. By using a CSA and a Wallace tree multiplying unit as each multiplying unit 420 and each adding unit 540, the arithmetic operation device 405 can reduce the circuit delay and shorten the processing time needed for one cycle.

The following describes another modification, while referencing the drawings. The modification shown below has a configuration and functions that are identical or similar to those of the embodiment or the first modification thereof shown in Figs. 1 to 6, and therefore descriptions other than the differences from those shown in Figs. 1 to 6 may be omitted.

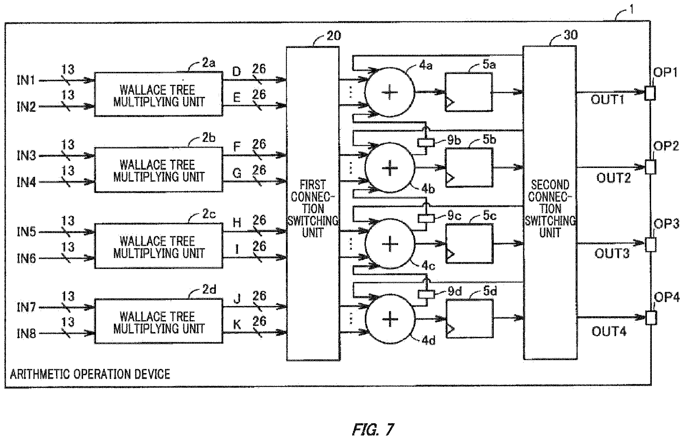

[Second Modification] Fig. 7 shows a configuration of an arithmetic operation device 1 of the second modification.

This arithmetic operation device 1 performs variable-precision multiplication. The arithmetic operation device 1 includes Wallace tree multiplying units 2a to 2d (corresponding to the multiplying units 420-1 to 420-4), a first connection switching unit 20 (corresponding to the first connection switching unit 470), adding units 4a to 4d (corresponding to the adding units 440-1 to 440-4), registers 5a to 5d (corresponding to the intermediate registers 450-1 to 450-4), a second connection switching unit 30 (corresponding to the second connection switching unit 480), output terminals OP1 to OP4, and switches 9b, 9c, and 9d.

The arithmetic operation device 1 receives eight inputs (IN1 to IN8) and outputs four outputs (OUT1 to OUT4). The inputs IN1 to IN8 are pieces of data that each have a 1-unit bit length (13 bits), and the outputs OUT1 to OUT4 each have a 2-unit bit length (26 bits).

The Wallace tree multiplying unit 2a receives the input data IN1 and the input data IN2 and performs carry hold addition a plurality of times based on the Wallace tree, thereby outputting the 26-bit sum signal D and carry signal E that are one stage before the multiplication result of the input data IN1 and the input data IN2. The Wallace tree multiplying units 2b to 2d are the same as the Wallace tree multiplying unit 2a, aside from the input data and output signals being different as shown in this drawing.

The adding units 4a to 4d each perform addition of a plurality of pieces of 26-bit-length data. The registers 5a to 5d hold the addition results of the respectively corresponding adding units 4a to 4d.

The first connection switching unit 20 switches the output destination for the high-order 13-bit data and the low-order 13-bit data forming each of the sum signals D, F, H, and J and the carry signals E, G, I, and K output from the Wallace tree multiplying units 2a to 2d, to any one of a plurality of bit positions (a bit position in the low-order half or a bit position in the high-order half) of the plurality of inputs of the adding units 4a to 4d, according to the calculation precision mode. The first connection switching unit 20 includes switches and shifters, and performs the switching described above by controlling the switches and shifters.

The second connection switching unit 30 switches the output destination for the high-order 13-bit data and the low-order 13-bit data forming each of the plurality of addition results in the registers 5a to 5d, to any one of a plurality of bit positions (a bit position in the low-order half or a bit position in the high-order half) of the plurality of inputs of the adding units 4a to 4d, or switches the output destination of the addition results of the adding units 4a to 4d in the registers 5a to 5d, to any one of the output terminals OP1 to OP4, according to the calculation precision mode. The second connection switching unit 30 includes switches and shifters, and performs the switching described above by controlling the switches and shifters.

The switch 9b switches whether or not the carry bit is transmitted from the adding unit 4b to the adding unit 4a. The switch 9c switches whether or not the carry bit is transmitted from the adding unit 4c to the adding unit 4b. The switch 9d switches whether or not the carry bit is transmitted from the adding unit 4d to the adding unit 4c.

The arithmetic operation device 1 operates in a plurality of calculation precision modes, which are the half-precision calculation mode, the single-precision calculation mode, and the double-precision calculation mode. The following describes the operation in each calculation mode.

### (Half-Precision Calculation Mode)

In the half-precision calculation mode, the multiplier and the multiplicand are each 13 bits, and the product is 26 bits. In the half-precision calculation mode, the multiplication is performed in one cycle. In the half-precision calculation mode, the switches 9b to 9d are OFF.

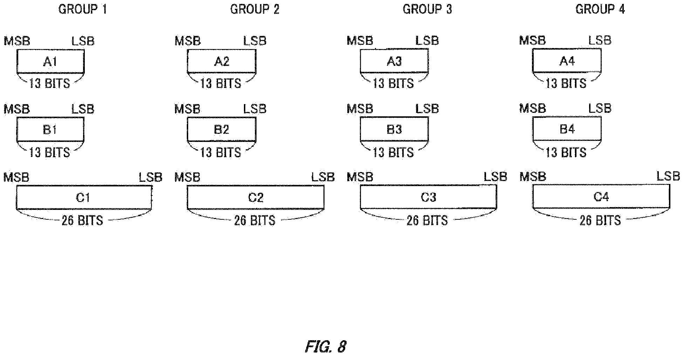

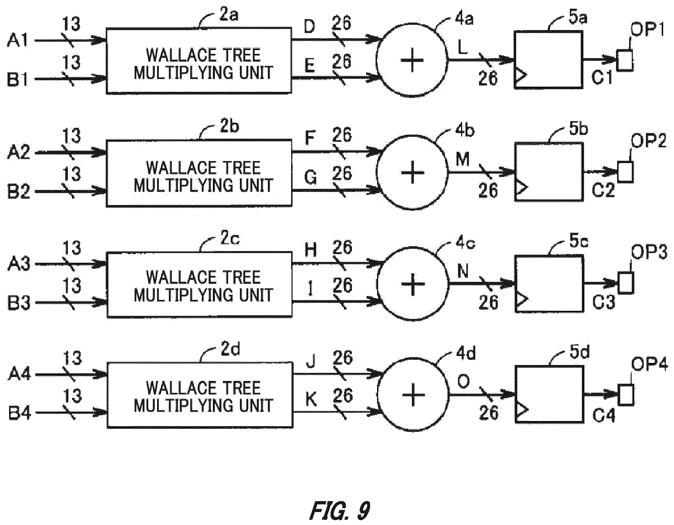

Fig. 8 shows i-th multipliers Ai, i-th multiplicands Bi, and i-th products Ci (i = 1, 2, 3, 4) during the half-precision calculation mode. Fig. 9 describes the operation of the arithmetic operation device 1 in the half-precision calculation mode of the second modification.

The arithmetic operation device 1 multiplies together an i-th multiplier Ai and an i-th multiplicand Bi, and outputs the multiplication result as an i-th product Ci. The Wallace tree multiplying unit 2a, upon receiving all 13 bits of the first multiplier A1 and all 13 bits of the first multiplicand B1, outputs the sum signal D and the carry signal E. The Wallace tree multiplying units 2b to 2d operate in the same manner as the Wallace tree multiplying unit 2a, aside from the inputs and outputs differing as shown in this drawing.

The output of each Wallace tree multiplying unit 2a to 2d (26-bit sum signal and 26-bit carry signal) is transmitted to the corresponding one of the adding units 4a to 4d, by the first connection switching unit 20.

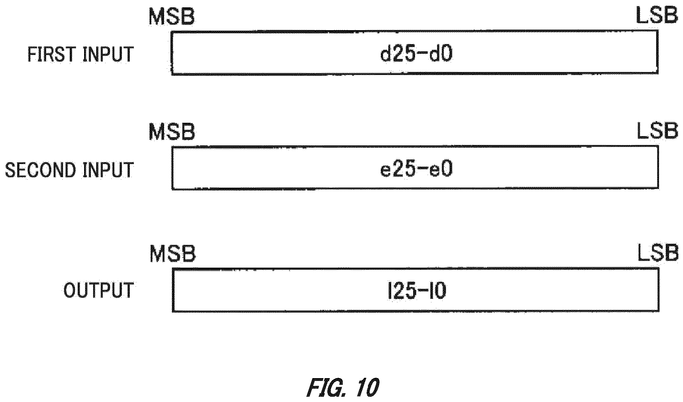

Fig. 10 shows the inputs and outputs of the adding unit 4a in the half-precision calculation mode of the second modification. The adding unit 4a receives each of all 26 bits {d25-d0} of the sum signal D as all 26 bits of the first input, and receives all 26 bits {e25-e0} of the carry signal E as all 26 bits of the second input. The low-order 26 bits {125-10} in the addition result L of the adding unit 4a are transmitted to the register 5a. The adding units 4b to 4d operate in the same manner as the adding unit 4a, other than the inputs and outputs differing as shown in this drawing.

The second connection switching unit 30 switches the output destination of the data in the registers 5a to 5d, to the output terminals OP1 to OP4. In this way, the first to fourth products C1 to C4 are output from the output terminals OP1 to OP4.

### (Single-Precision Calculation Mode)

In the single-precision calculation mode, the multiplier and the multiplicand are each 26 bits, and the product is 52 bits. In the single-precision calculation mode, the multiplication is performed in two cycles. In the single-precision calculation mode, the switches 9b and 9d are ON and the switch 9c is OFF.

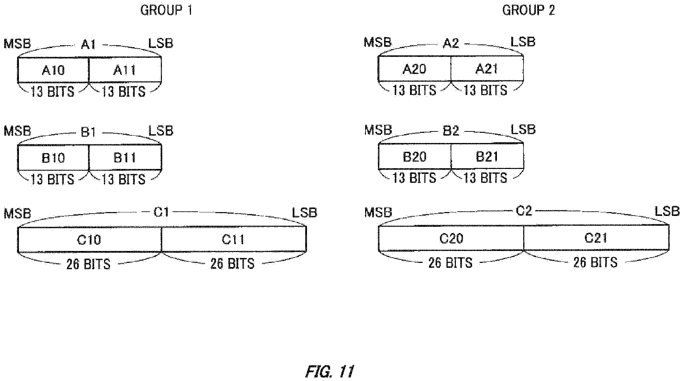

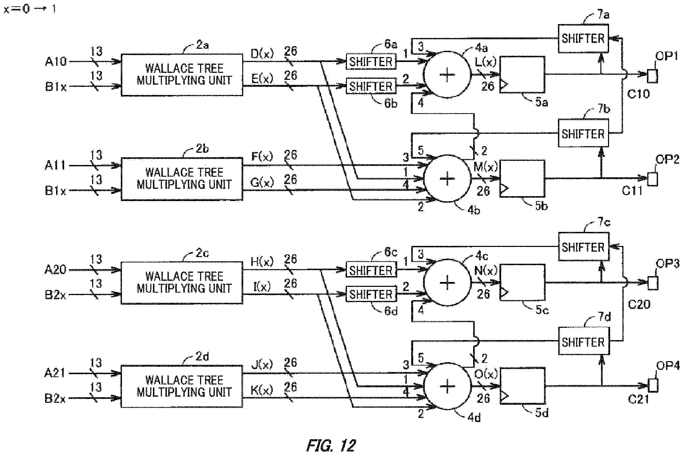

Fig. 11 shows i-th multipliers Ai, i-th multiplicands Bi, and i-th products Ci (i = 1, 2) during the single-precision calculation mode. Fig. 12 describes an operation of the arithmetic operation device 1 in the single-precision calculation mode of the second modification, mainly relating to a case where i = 1. The operation in the case where i = 2 is the same as the operation in the case where i = 1, other than the inputs and outputs being different, and therefore a description thereof is omitted.

The arithmetic operation device 1 multiplies together an i-th multiplier Ai and an i-th multiplicand Bi, and outputs an i-th product Ci (i = 1, 2). The high-order 13 bits of the i-th multiplier Ai are Ai0, and the low-order 13 bits of the i-th multiplier Ai are Ai1. The high-order 13 bits of the i-th multiplicand Bi are Bi0, and the low-order 13 bits of the i-th multiplicand Bi are Bi1. The high-order 26 bits of the i-th product Ci are Ci0, and the low-order 26 bits of the i-th product Ci are Ci1.

First, the calculation procedure of the first cycle in the single-precision calculation mode is described, mainly relating to the case where i = 1.

The Wallace tree multiplying unit 2a, upon receiving the high-order 13 bits A10 of the first multiplier A1 and the high-order 13 bits B10 of the first multiplicand B1, outputs the sum signal D(0) and the carry signal E(0). The Wallace tree multiplying unit 2b, upon receiving the low-order 13 bits A11 of the first multiplier A1 and the high-order 13 bits B10 of the first multiplicand B1, outputs the sum signal F(0) and the carry signal G(0).

The outputs of the Wallace tree multiplying units 2a to 2d are transmitted to the adding units 4a to 4d by the first connection switching unit 20. The data in the registers 5a to 5d is transmitted to the adding units 4a to 4d by the second connection switching unit 30.

Essentially, the high-order 13 bits of the sum signal D(0) are transmitted to the shifter 6a. The shifter 6a shifts the high-order 13 bits of the sum signal D(0) by 13 bits toward the low-order side, and supplies the shifted bits to the low-order 13 bit positions of the first input of the adding unit 4a. The low-order 13 bits of the sum signal D(0) are transmitted to the high-order 13 bit positions of the first input of the adding unit 4b. The high-order 13 bits of the carry signal E(0) are transmitted to the shifter 6b. The shifter 6b shifts the high-order 13 bits of the carry signal E(0) by 13 bits toward the low-order side, and supplies the shifted bits to the low-order 13 bit positions of the second input of the adding unit 4a. The low-order 13 bits of the carry signal E(0) are transmitted to the high-order 13 bit positions of the second input of the adding unit 4b. All 26 bits of the sum signal F(0) are supplied to all 26 bit positions of the third input of the adding unit 4b. All 26 bits of the carry signal G(0) are supplied to all 26 bit positions of the fourth input of the adding unit 4b.

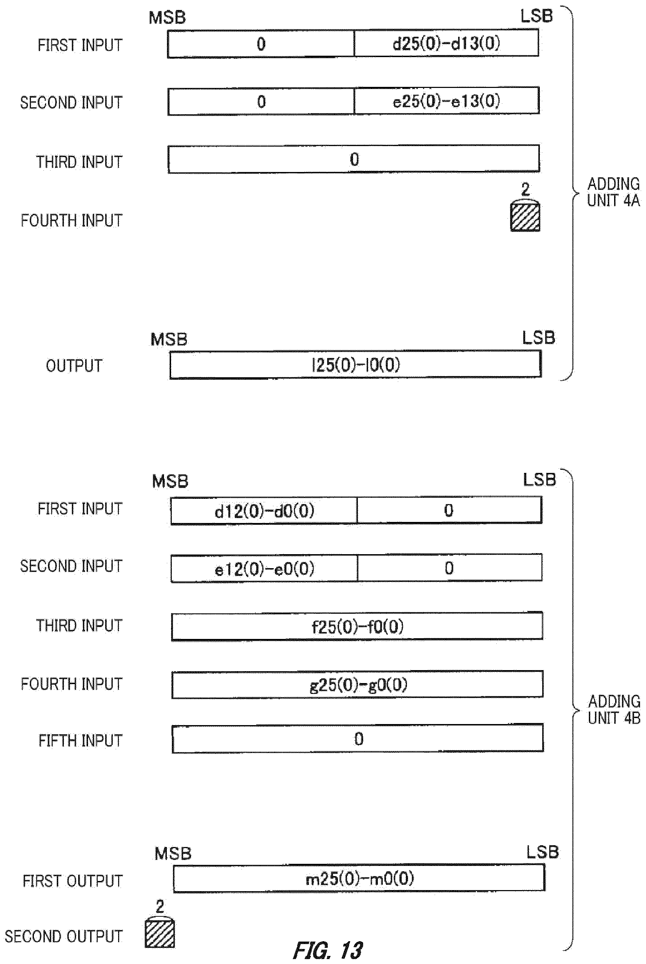

Fig. 13 shows inputs and outputs of the adding units 4a and 4b in the first cycle, in the single-precision calculation mode of the second modification.

The adding unit 4a receives the high-order 13 bits {d25(0)-d13(0)} of the sum signal D(0) at the low-order 13 bit positions of the first input. The adding unit 4a receives the high-order 13 bits {e25(0)-e13(0)} of the carry signal E(0) at the low-order 13 bit positions of the second input. The adding unit 4a receives 26 bits (all bits are 0) from the shifter 7a at all 26 bit positions of the third input. The adding unit 4a receives the high-order 2 bits in the adding result (28 bits) of the adding unit 4b at the low-order two bit positions of the fourth input.

The low-order 26 bits {125(0)-10(0)} in the addition result L(0) of the adding unit 4a are transmitted to the register 5a.

The adding unit 4b receives the low-order 13 bits {d12(0)-d0(0)} of the sum signal D(0) at the high-order 13 bit positions of the first input. The adding unit 4b receives the low-order 13 bits {e12(0)-e0(0)} of the carry signal E(0) at the high-order 13 bit positions of the second input.

The adding unit 4b receives all 26 bits {f25(0)-f0(0)} of the sum signal F(0) at all 26 bit positions of the third input. The adding unit 4b receives all 26 bits {g25(0)-g0(0)} of the carry signal G(0) at all 26 bit positions of the fourth input. The adding unit 4b receives 26 bits (all bits are 0) from the shifter 7b at all 26 bit positions of the fifth input.

The low-order 26 bits {m25(0)-m0(0)} in the addition result M(0) of the adding unit 4b are transmitted to the register 5b as the first output. The high-order 2 bits in the addition result M(0) of the adding unit 4b are transmitted to the low-order 2 bit positions of the fourth input of the adding unit 4a, as the second output.

Next, the calculation procedure of the second cycle in the single-precision calculation mode is described. The Wallace tree multiplying unit 2a, upon receiving the high-order 13 bits A10 of the first multiplier A1 and the low-order 13 bits B11 of the first multiplicand B1, outputs the sum signal D(1) and the carry signal E(1). The Wallace tree multiplying unit 2b, upon receiving the low-order 13 bits A11 of the first multiplier A1 and the low-order 13 bits B11 of the first multiplicand B1, outputs the sum signal F(1) and the carry signal G(1).

The outputs of the Wallace tree multiplying units 2a to 2d are transmitted to the adding units 4a to 4d by the first connection switching unit 20. The data in the registers 5a to 5d is transmitted to the adding units 4a to 4d by the second connection switching unit 30. The first connection switching unit 20 transmits the signals D(1) to G(1) to the adding units 4a and 4b, in the same manner as the signals D(0) to G(0) of the first cycle.

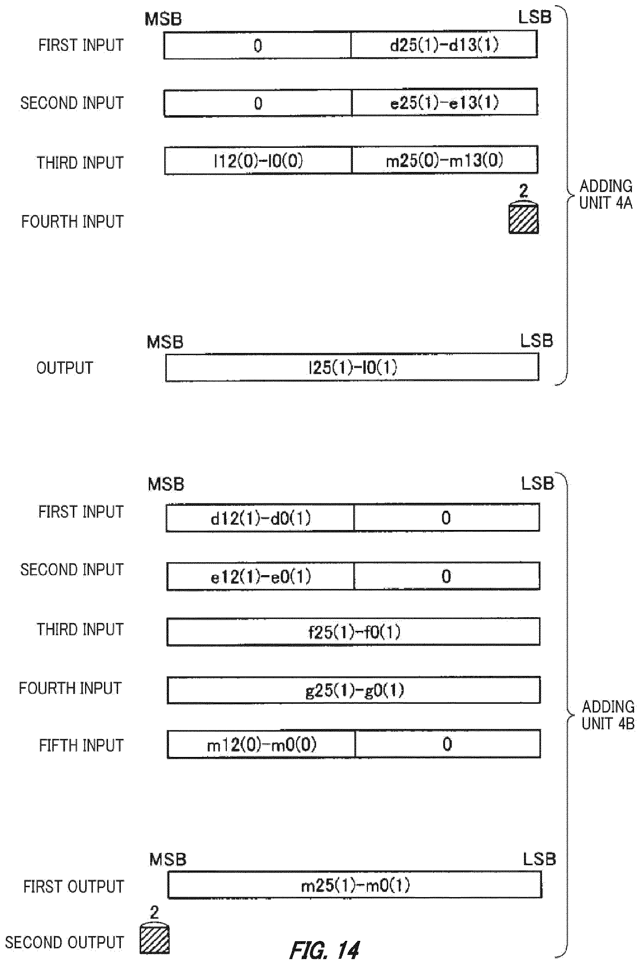

Fig. 14 shows the inputs and outputs of the adding units 4a and 4b in the second cycle, in the single-precision calculation mode of the second modification. Since the first, second, and fourth inputs and the output of the adding unit 4a and the first to fourth inputs and the output of the adding unit 4b are signals in the second cycle corresponding to the signals provided to each input and the signals output in the first cycle, as shown in this drawing, the following description omits all but differing points.

The shifter 7a shifts the 26 bits {125(0)-10(0)} held in the register 5a by 13 bits toward the high-order side. The shifter 7b shifts the 26 bits {m25(0)-m0(0)} held in the register 5b by 13 bits toward the high-order side, and transmits the 13 bits {m25(0)-m13(0)} that overflow from the shifter 7b to the low-order 13 bit positions of the shifter 7a. The adding unit 4a receives the 26 bits {high-order 13 bits 112(0)-10(0) and low-order 13 bits m25(0)-m13(0)} from the shifter 7a at all 26 bit positions of the third input.

The adding unit 4b receives the 26 bits {high-order 13 bits m12(0)-m0(0) and low-order 13 bits that are all 0} from the shifter 7b at all 26 bit positions of the fifth input.

The second connection switching unit 30 switches the output destination of the data in the registers 5a to 5d to the output terminals OP1 to OP4, after the second cycle has ended. In this way, the high-order 26 bits C10 of the first product, the low-order 26 bits C11 of the first product, the high-order 26 bits C20 of the second product, and the low-order 26 bits C21 of the second product are output from the output terminals OP1 to OP4.

### (Double-Precision Calculation Mode)

In the double-precision calculation mode, the multiplier and the multiplicand are each 52 bits, and the product is 104 bits. In the double-precision calculation mode, the multiplication is performed in four cycles. In the double-precision calculation mode, the switches 9b, 9c, and 9d are ON.

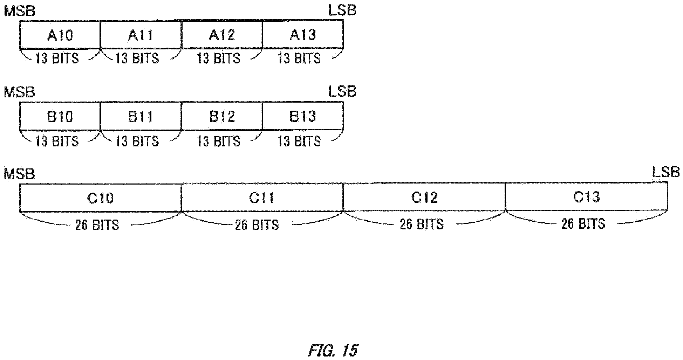

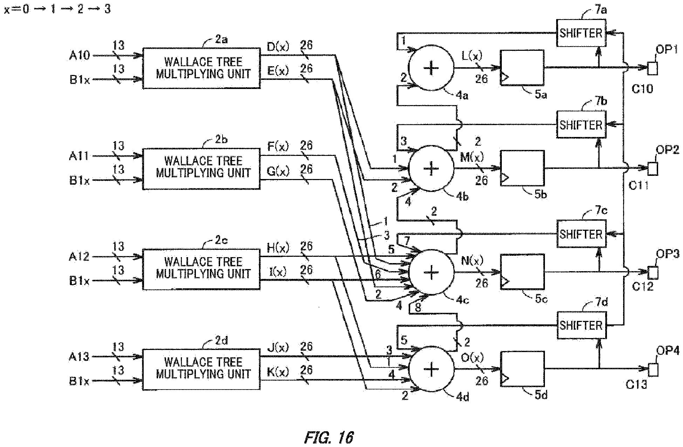

Fig. 15 shows a multiplier A1, a multiplicand B1, and a product C1 during the double-precision calculation mode. Fig. 16 describes an operation of the arithmetic operation device 1 of the second modification in the double-precision calculation mode.

As shown in Figs. 15 and 16, the arithmetic operation device 1 multiplies together the multiplier A1 and the multiplicand B1, and outputs the product C1. The multiplier A1 is divided into first to fourth bit groups (first to fourth digit ranges) A10 to A13, in order from the high-order bit position. The multiplicand B1 is divided into first to fourth bit groups (first to fourth digit ranges) B10 to B13, in order from the high-order bit position. The product C1 is divided into first to fourth bit groups C10 to C13, in order from the high-order bit position.

First, the calculation procedure of the first cycle in the double-precision calculation mode is described. The Wallace tree multiplying unit 2a receives the first bit group A10 of the multiplier A1 and the first bit group B10 of the multiplicand B1, and outputs the sum signal D(0) and the carry signal E(0). The Wallace tree multiplying unit 2b receives the second bit group A11 of the multiplier A1 and the first bit group B10 of the multiplicand B1, and outputs the sum signal F(0) and the carry signal G(0). The Wallace tree multiplying unit 2c receives the third bit group A12 of the multiplier A1 and the first bit group B10 of the multiplicand B1, and outputs the sum signal H(0) and the carry signal 1(0). The Wallace tree multiplying unit 2d receives the fourth bit group A13 of the multiplier A1 and the first bit group B10 of the multiplicand B1, and outputs the sum signal J(0) and the carry signal K(0).

The outputs of the Wallace tree multiplying units 2a to 2d are transmitted to the adding units 4a to 4d by the first connection switching unit 20. The data in the registers 5a to 5d is transmitted to the adding units 4a to 4d by the second connection switching unit 30.

Essentially, the high-order 13 bits of the sum signal D(0) are transmitted to the low-order 13 bit positions of the first input of the adding unit 4b. The low-order 13 bits of the sum signal D(0) are transmitted to the high-order 13 bits of the first input of the adding unit 4c. The high-order 13 bits of the carry signal E(0) are transmitted to the low-order 13 bit positions of the second input of the adding unit 4b. The low-order 13 bits of the carry signal E(0) are transmitted to the high-order 13 bit positions of the second input of the adding unit 4c. All 26 bits of the sum signal F (0) are transmitted to all 26 bit positions of the third input of the adding unit 4c. All 26 bit positions of the carry signal G(0) are supplied to all 26 bit positions of the fourth input of the adding unit 4c. The high-order 13 bits of the sum signal H(0) are transmitted to the low-order 13 bit positions of the fifth input of the adding unit 4c. The low-order 13 bits of the sum signal H(0) are transmitted to the high-order 13 bit positions of the first input of the adding unit 4d. The high-order 13 bits of the carry signal 1(0) are transmitted to the low-order 13 bit positions of the sixth input of the adding unit 4c. The low-order 13 bits of the carry signal 1(0) are transmitted to the high-order 13 bit positions of the second input of the adding unit 4d. All 26 bits of the sum signal J(0) are supplied to all 26 bit positions of the third input of the adding unit 4d. All 26 bits of the carry signal K(0) are supplied to all 26 bits of the fourth input of the adding unit 4d.

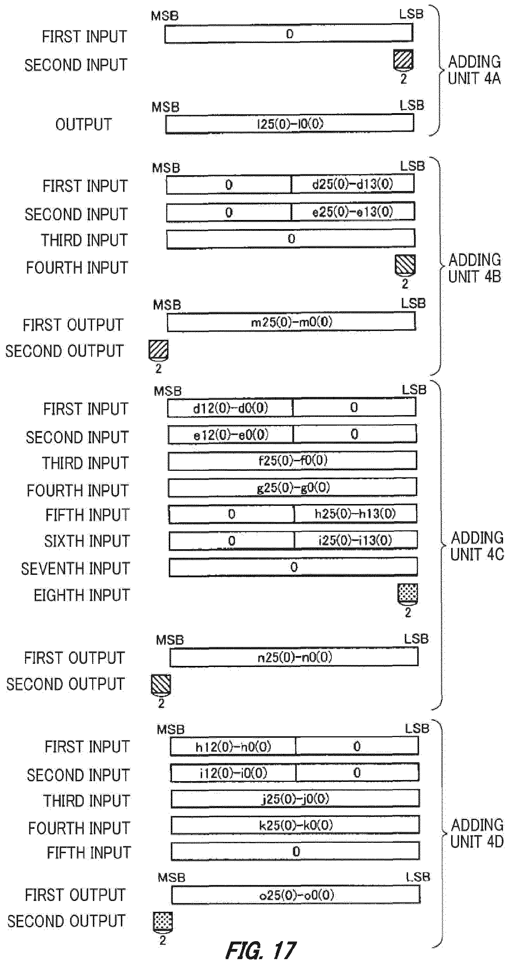

Fig. 17 shows the inputs and outputs of the adding units 4a to 4d in the first cycle, in the double-precision calculation mode of the second modification. The adding unit 4a receives 26 bits (all bits are 0) from the shifter 7a at all 26 bit positions of the first input. The adding unit 4a receives the high-order 2 bits in the addition result M(0) (28 bits) of the adding unit 4b at the low-order 2 bit positions of the second input.

The low-order 26 bits {125(0)-10(0)} o\in the addition result L(0) of the adding unit 4a are transmitted to the register 5a.

The adding unit 4b receives the high-order 13 bits {d25(0)-d13(0)} of the sum signal D(0) at the low-order 13 bit positions of the first input. The adding unit 4b receives the high-order 13 bits {e25(0)-e13(0)} of the carry signal E(0) at the low-order 13 bit positions of the second input. The adding unit 4b receives 26 bits (all bits are 0) from the shifter 7b at all 26 bit positions of the third input. The adding unit 4b receives the high-order 2 bits in the addition result N(0) (28 bits) of the adding unit 4c at the low-order 2 bit positions of the fourth input.

The low-order 26 bits {m25(0)-m0(0)} in the addition result M(0) of the adding unit 4b are transmitted to the register 5b, as the first output. The high-order 2 bits in the addition result M(0) of the adding unit 4b are transmitted to the low-order 2 bit positions of the second input of the adding unit 4a, as the second output.

The adding unit 4c receives the low-order 13 bits {d12(0)-d0(0)} of the sum signal D(0) at the high-order 13 bit positions of the first input. The adding unit 4c receives the low-order 13 bits {e12(0)-e0(0)} of the carry signal E(0) at the high-order 13 bit positions of the second input. The adding unit 4c receives all 26 bits {f25(0)-f0(0)} of the sum signal F (0) at all 26 bit positions of the third input. The adding unit 4c receives all 26 bits {g25(0)-g0(0)} of the carry signal G (0) at all 26 bit positions of the fourth input. The adding unit 4c receives the high-order 13 bits {h25(0)-h13(0)} of the sum signal H(0) at the low-order 13 bit positions of the fifth input. The adding unit 4c receives the high-order 13 bits {i25(0)-i13(0)} of the carry signal I(0) at the low-order 13 bit positions of the sixth input. The adding unit 4c receives 26 bits (all bits are 0) from the shifter 7c at all 26 bit positions of the seventh input. The adding unit 4c receives the high-order 2 bits in the addition result O(0) (28 bits) of the adding unit 4d at the low-order 2 bit positions of the eighth input.

The low-order 26 bits {n25(0)-n0(0)} in the addition result N(0) of the adding unit 4c are transmitted to the register 5c, as the first output. The high-order 2 bits in the addition result N(0) of the adding unit 4c are transmitted to the low-order 2 bit positions of the fourth input of the adding unit 4b, as the second output.

The adding unit 4d receives the low-order 13 bits {h12(0)-h0(0)} of the sum signal H(0) at the high-order 13 bit positions of the first input. The adding unit 4d receives the low-order 13 bits {i12(0)-i0(0)} of the carry signal I(0) at the high-order 13 bit positions of the second input. The adding unit 4d receives all 26 bits {j25(0)-j0(0)} of the sum signal J(0) at all 26 bit positions of the third input. The adding unit 4d receives all 26 bits {k25(0)-k0(0)} of the carry signal K(0) at all 26 bit positions of the fourth input. The adding unit 4d receives 26 bits (all bits are 0) from the shifter 7d at all 26 bit positions of the fifth input.

The low-order 26 bits {o25(0)-o0(0)} in the addition result O(0) of the adding unit 4d are transmitted to the register 5d, as the first output. The high-order 2 bits of the addition result O(0) of the adding unit 4d are transmitted to the low-order 2 bit positions of the eighth input of the adding unit c4c, as the second output.

Next, the calculation procedure of the second cycle in the double-precision calculation mode is described. The Wallace tree multiplying unit 2a receives the first bit group A10 of the multiplier A1 and the second bit group B11 of the multiplicand B1, and outputs the sum signal D(1) and the carry signal E(1). The Wallace tree multiplying unit 2b receives the second bit group A11 of the multiplier A1 and the second bit group B11 of the multiplicand B1, and outputs the sum signal F(1) and the carry signal G(1). The Wallace tree multiplying unit 2c receives the third bit group A12 of the multiplier A1 and the second bit group B11 of the multiplicand B1, and outputs the sum signal H(1) and the carry signal I(1). The Wallace tree multiplying unit 2d receives the fourth bit group A13 of the multiplier A1 and the second bit group B1 1 of the multiplicand B1, and outputs the sum signal J(1) and the carry signal K(1).

The outputs of the Wallace tree multiplying unit 2a to 2d are transmitted to the adding units 4a to 4d by the first connection switching unit 20. The data in the registers 5a to 5d is transmitted to the adding units 4a to 4d by the second connection switching unit 30. The first connection switching unit 20 transmits the signals D(1) to K(1) to the adding units 4a to 4d, in the same manner as the signals D(0) to K(0) of the first cycle.

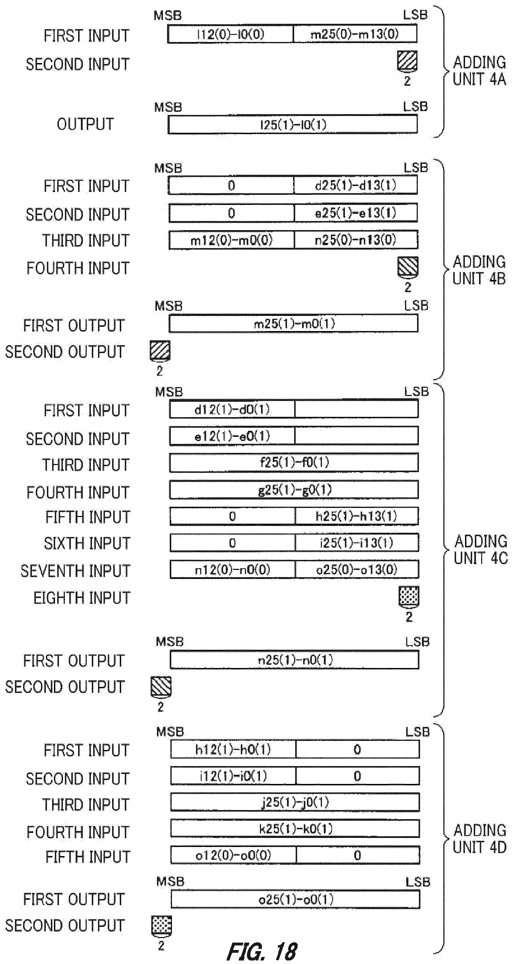

Fig. 18 shows the inputs and outputs of the adding units 4a to 4d in the second cycle, in the double-precision calculation mode of the second modification. Since the output of the adding unit 4a, the first, second, and fourth inputs and the output of the adding unit 4b, the first to sixth and eighth inputs and the output of the adding unit 4c, and the first to fourth inputs and the output of the adding unit 4d are signals in the second cycle corresponding to the signals provided to each input and the signals output in the first cycle, as shown in this drawing, the following description omits all but differing points.

The shifter 7a shifts the 26 bits {l25(0)-l0(0)} held in the register 5a by 13 bits toward the high-order side. The shifter 7b shifts the 26 bits {m25(0)-m0(0)} held in the register 5b by 13 bits toward the high-order side, and transmits the 13 bits {m25(0)-m13(0)} that overflow from the shifter 7b to the low-order 13 bit positions of the shifter 7a.

The adding unit 4a receives the 26 bits {high-order 13 bits 112(0)-10(0) and low-order 13 bits m25(0)-m13(0)} from the shifter 7a at all 26 bit positions of the first input.

The shifter 7c shifts the 26 bits {n25(0)-n0(0)} held in the register 5c by 13 bits toward the high-order side, and transmits the 13 bits {n25(0)-n13(0)} that overflow from the shifter 7c to the low-order 13 bit positions of the shifter 7b.

The adding unit 4b receives the 26 bits {high-order 13 bits m12(0)-m0(0) and low-order 13 bits n25(0)-n13(0)} from the shifter 7b at all 26 bit positions of the third input. The adding unit 4b receives the high-order 2 bits in the addition result N(1) (28 bits) of the adding unit 4c at the low-order 2 bit positions of the fourth input.

The shifter 7d shifts the 26 bits {o25(0)-o0(0)} held in the register 5d by 13 bits toward the high-order side, and transmits the 13 bits {o25(0)-o13(0)} that overflow from the shifter 7d to the low-order 13 bit positions of the shifter 7c.

The adding unit 4c receives the 26 bits {high-order 13 bits n12(0)-n0(0) and low-order 13 bits o25(0)-o13(0)} from the shifter 7c at all 26 bit positions of the seventh input.

The adding unit 4d receives the 26 bits {high-order 13 bits o12(0)-o0(0) and low-order 13 bits that are all 0} from the shifter 7d at all 26 bit positions of the fifth input.

The low-order 26 bits {o25(1)-o0(1)} in the addition result O(1) of the adding unit 4d are transmitted to the register 5d, as the first output. The high-order 2 bits in the addition result O(1) of the adding unit 4d are transmitted to the low-order 2 bit positions of the eighth input of the adding unit 4c, as the second output.

The inputs of the Wallace tree multiplying units 2a to 2d in the third cycle in the double-precision calculation mode operate as described below.

The Wallace tree multiplying unit 2a receives the first bit group A10 of the multiplier A1 and the third bit group B12 of the multiplicand B1, and outputs the sum signal D(2) and the carry signal E(2). The Wallace tree multiplying unit 2b receives the second bit group A11 of the multiplier A1 and the third bit group B12 of the multiplicand B1, and outputs the sum signal F(2) and the carry signal G(2). The Wallace tree multiplying unit 2c receives the third bit group A12 of the multiplier A1 and the third bit group B12 of the multiplicand B1, and outputs the sum signal H(2) and the carry signal I(2). The Wallace tree multiplying unit 2d receives the fourth bit group A13 of the multiplier A1 and the third bit group B12 of the multiplicand B1, and outputs the sum signal J(2) and the carry signal K(2).

The calculation procedure from this point in the third cycle is similar to the calculation procedure in the second cycle, and therefore this description is not repeated.

The inputs of the Wallace tree multiplying units 2a to 2d in the fourth cycle in the double-precision calculation mode operate as described below.

The Wallace tree multiplying unit 2a receives the first bit group A10 of the multiplier A1 and the fourth bit group B13 of the multiplicand B1, and outputs the sum signal D(3) and the carry signal E(3). The Wallace tree multiplying unit 2b receives the second bit group A11 of the multiplier A1 and the fourth bit group B13 of the multiplicand B1, and outputs the sum signal F(3) and the carry signal G(3). The Wallace tree multiplying unit 2c receives the third bit group A12 of the multiplier A1 and the fourth bit group B13 of the multiplicand B1, and outputs the sum signal H(3) and the carry signal I(3). The Wallace tree multiplying unit 2d receives the fourth bit group A13 of the multiplier A1 and the fourth bit group B13 of the multiplicand B1, and outputs the sum signal J(3) and the carry signal K(3).

The calculation procedure from this point in the fourth cycle is similar to the calculation procedure in the second cycle, and therefore this description is not repeated.

The second connection switching unit 30 switches the output destination of the data in the registers 5a to 5d to the output terminals OP1 to OP4, after the fourth cycle has ended. In this way, the first to fourth bit groups C10 to C13 of the product C1 are output from the output terminals OP1 to OP4.

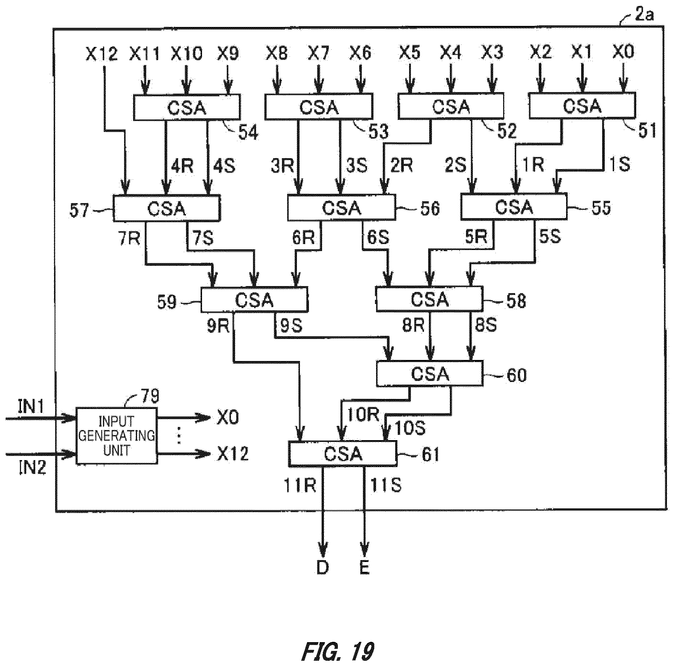

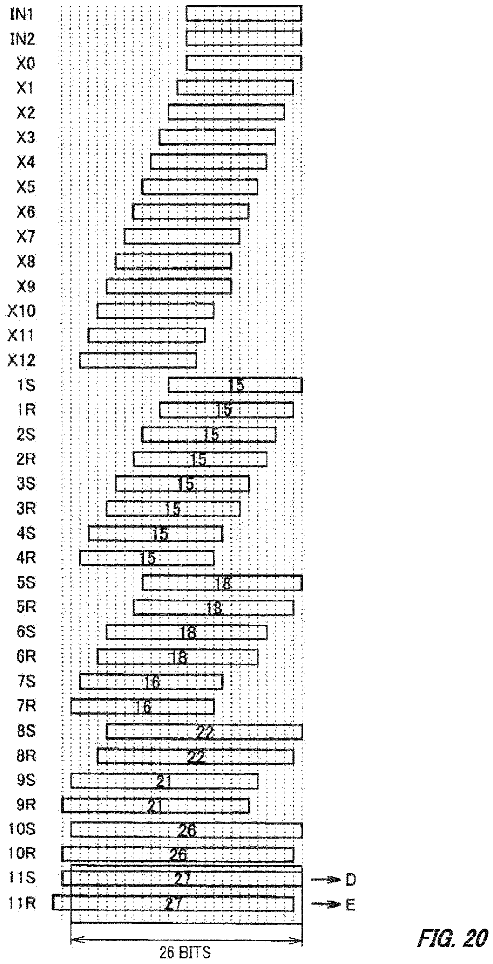

Fig. 19 shows a configuration of the Wallace tree multiplying unit 2a. Fig. 20 shows data generated by the Wallace tree multiplying unit 2a.

The Wallace tree multiplying unit 2a includes an input generating unit 79 and CSAs (Carry Save Adders) 51 to 61. The input generating unit 79 generates each of 13 bits X0 to X12 from the 13-bit input IN1 and the 13-bit input IN2.

X0 is the product of IN1 and the 0-th bit (LSB) of IN2. If the 0-th bit of IN2 is 0, all bits of X0 are 0. If the 0-th bit of IN2 is 1, all bits of X0 are the same as all bits of IN1. Similarly, Xi (i = 1 to 13) is the product of IN1 and the i-th bit of IN2.

The CSA 51 performs carry-signal hold addition of X1, X2, and X3, and outputs a sum signal 1S and a carry signal 1R. The CSA 52 performs carry-signal hold addition of X3, X4, and X5, and outputs a sum signal 2S and a carry signal 2R. The CSA 53 performs carry-signal hold addition of X6, X7, and X8, and outputs a sum signal 3S and a carry signal 3R. The CSA 54 performs carry-signal hold addition of X9, X10, and X11, and outputs a sum signal 4S and a carry signal 4R. The CSA 55 performs carry-signal hold addition of the sum signal 1S, the carry signal 1R, and the sum signal 2S, and outputs a sum signal 5S and a carry signal 5R. The CSA 56 performs carry-signal hold addition of the carry signal 2R, the sum signal 3S, and the carry signal 3R, and outputs a sum signal 6S and a carry signal 6R. The CSA 57 performs carry-signal hold addition of the sum signal 4S, the carry signal 4R, and X12, and outputs a sum signal 7S and a carry signal 7R. The CSA 58 performs carry-signal hold addition of the sum signal 5S, the carry signal 5R, and the sum signal 6S, and outputs a sum signal 8S and a carry signal 8R. The CSA 59 performs carry-signal hold addition of the carry signal 6R, the sum signal 7S, and the carry signal 7R, and outputs a sum signal 9S and a carry signal 9R. The CSA 60 performs carry-signal hold addition of the sum signal 8S, the carry signal 8R, and the sum signal 9S, and outputs a sum signal 10S and a carry signal 10R. The CSA 61 performs carry-signal hold addition of the sum signal 10S, the carry signal 10R, and the carry signal 9R, and outputs a sum signal 11S and a carry signal 11R. The sum signal 11S becomes the sum signal D output from the Wallace tree multiplying unit 2a, and the carry signal 11R becomes the carry signal E output from the Wallace tree multiplying unit 2a.

The adding units 4a to 4d may also include a plurality of CSAs and perform addition based on Wallace trees.

In the manner described above, according to the present modification, it is possible to perform half-precision calculation, single-precision calculation, and double-precision calculation with small-scale circuitry.

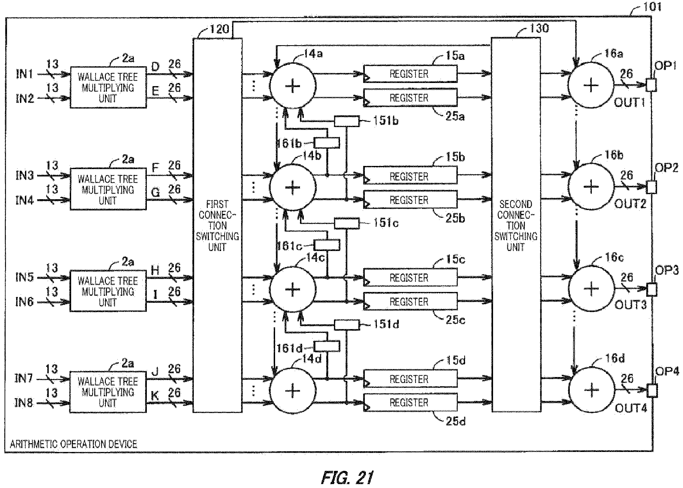

[Third Modification] Fig. 21 shows a configuration of an arithmetic operation device 101 of a third modification.

This arithmetic operation device 101 includes Wallace tree multiplying units 2a to 2d, a first connection switching unit 120, adding units 14a to 14d, registers 15a to 15d, registers 25a to 25d, a second connection switching unit 130, adding units 16a to 16d, output terminals OP1 to OP4, and switches 161b to 161d and 151b to 151d. The arithmetic operation device 101 receives eight inputs (IN1 to IN8) and outputs four calculation results (OUT1 to OUT4), in the same manner as in the second modification.

The arithmetic operation device 101 of the third modification uses carry save adders (CSAs) in place of the adding units 4a to 4d in the arithmetic operation device 1 of the second modification, and has an change added to the arithmetic operation device 1 of the second modification that is similar to the change from the embodiment of Fig. 1 to the first modification of Fig. 6. Essentially, the registers 5a to 5d in the arithmetic operation device 1 are divided into registers 15a to 15d and registers 25a to 25d, in order to be able to hold the sum signal and the carry signal separately. Furthermore, adding units 16a to 16d corresponding to the second adding element 544 of the first modification are provided in order to calculate the final product by adding together the sum signal and the carry signal held in the registers 15a to 15d and the registers 25a to 25d. Yet further, in accordance with the adding units 4a to 4d being CSAs, the switches 9b to 9d that switch whether the carries from the adding units 4b to 4d are transmitted to the high-order side are divided into switches 161b to 161d for the sum signals and switches 151b to 151d for the carry signals. The following describes the configuration and operation of the arithmetic operation device 101, while focusing on points that have been changed from the arithmetic operation device 1 of the second modification.

The Wallace tree multiplying units 2a to 2d are similar to those of the second modification. The adding units 14a to 14d output, based on the Wallace tree, sum signals and carry signals that are one stage before the addition result of a plurality of pieces of data that each have a 2-unit bit length.

The registers 15a to 15d hold the sum signals output from the respectively corresponding adding units 14a to 14d. The registers 25a to 25d hold the carry signals output from the respectively corresponding adding units 14a to 14d.

The adding units 16a to 16d add together the sum signals and carry signals input respectively thereto. The output terminals OP1 to OP4 output the addition results of the respective adding units 16a to 16d.

The first connection switching unit 120 is similar to that of the second modification.

The second connection switching unit 130, instead of switching the destination output of each addition result of the registers 5a to 5d in the same manner as in the second modification, switches the output destinations of a set of the sum signal and carry signal of the register 15a and the register 25a, a set of the sum signal and carry signal of the register 15b and the register 25b, a set of the sum signal and carry signal of the register 15c and the register 25c, and a set of the sum signal and carry signal of the register 15d and the register 25d.

The switch 161b switches whether the carry bit of the sum signal is transmitted from the adding unit 14b to the adding unit 14a. The switch 161c switches whether the carry bit of the sum signal is transmitted from the adding unit 14c to the adding unit 14b. The switch 161d switches whether the carry bit of the sum signal is transmitted from the adding unit 14d to the adding unit 14c. The switch 151b switches whether the carry bit of the carry signal is transmitted from the adding unit 14b to the adding unit 14a. The switch 151c switches whether the carry bit of the carry signal is transmitted from the adding unit 14c to the adding unit 14b. The switch 151d switches whether the carry bit of the carry signal is transmitted from the adding unit 14d to the adding unit 14c.

The arithmetic operation device 101 operates in the half-precision calculation mode, the single-precision calculation mode, and the double-precision calculation mode, in the same manner as in the second modification. The following describes the operation in each calculation mode, while focusing on the differences with respect to the operation of the arithmetic operation device 1 of the second modification.

### (Half-Precision Calculation Mode)

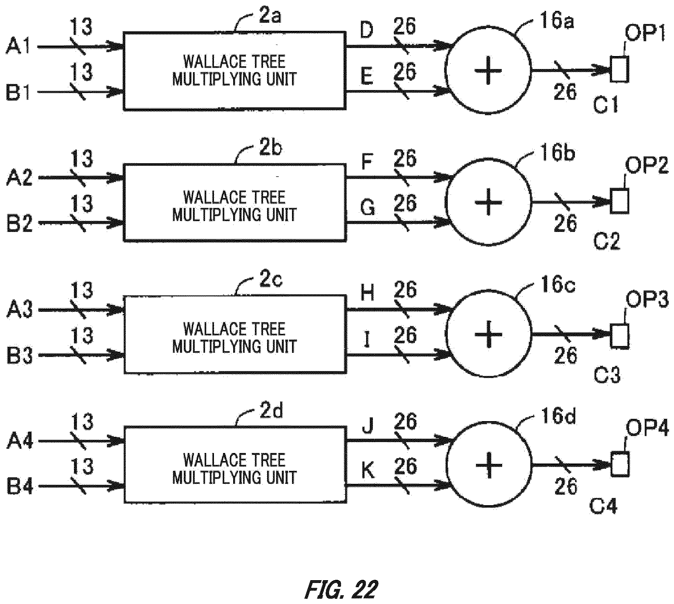

Fig. 22 describes the operation of the arithmetic operation device 101 of the third modification in the half-precision mode. In the half-precision calculation mode, the outputs of the Wallace tree multiplying units 2a to 2d are transmitted to the adding units 16a to 16d by the first connection switching unit 120.

Essentially, as an example, all 26 bits of the sum signal D are supplied to all 26 bit positions of the first input of the adding unit 16a, and all 26 bits of the carry signal E are supplied to all 26 bit positions of the second input of the adding unit 16a.

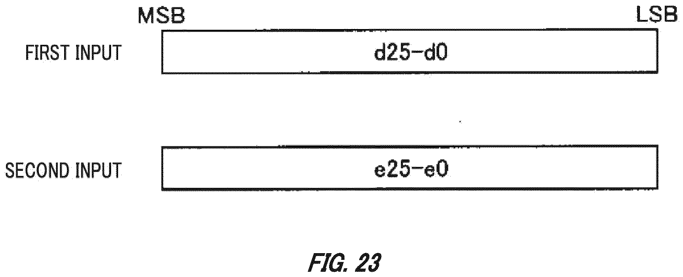

Fig. 23 shows the inputs of the adding unit 16a in the in the half-precision calculation mode of the third modification.

The adding unit 16a receives all 26 bits {d25-d0} of the sum signal D at all 26 bit positions of the first input. The adding unit 16a receives all 26 bits {e25-e0} of the carry signal E at all 26 bit positions of the second input. The adding unit 16a adds together all 26 bits of the sum signal D and all 26 bits of the carry signal E, and outputs the low-order 26 bits as the first product C1. The adding units 16b to 16d operate in the same manner as the adding unit 16a, aside from the inputs and outputs differing as shown in Fig. 22.

### (Single-Precision Calculation Mode)

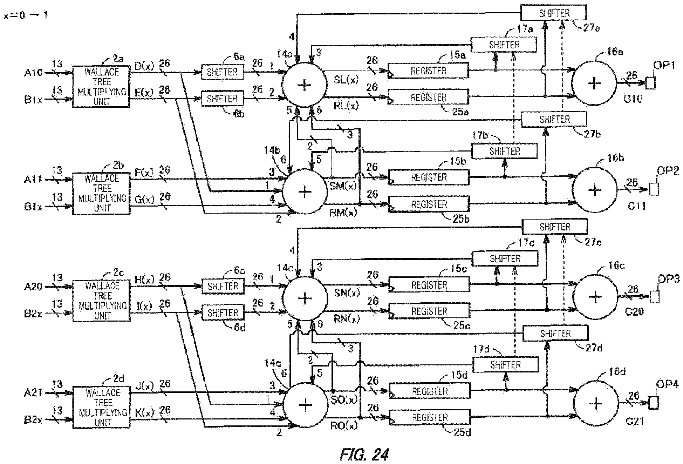

Fig. 24 shows the operation of the arithmetic operation device 101 of the third modification in the single-precision calculation mode, while mainly focusing on differences with respect to the second modification in the operation of calculating the product C1 of the multiplier A1 and the multiplicand B1. The shifters 7a to 7d of Fig. 16 are divided into shifters 17a to 17d and shifters 27a to 27d that shift the sums signal and the carry signals.

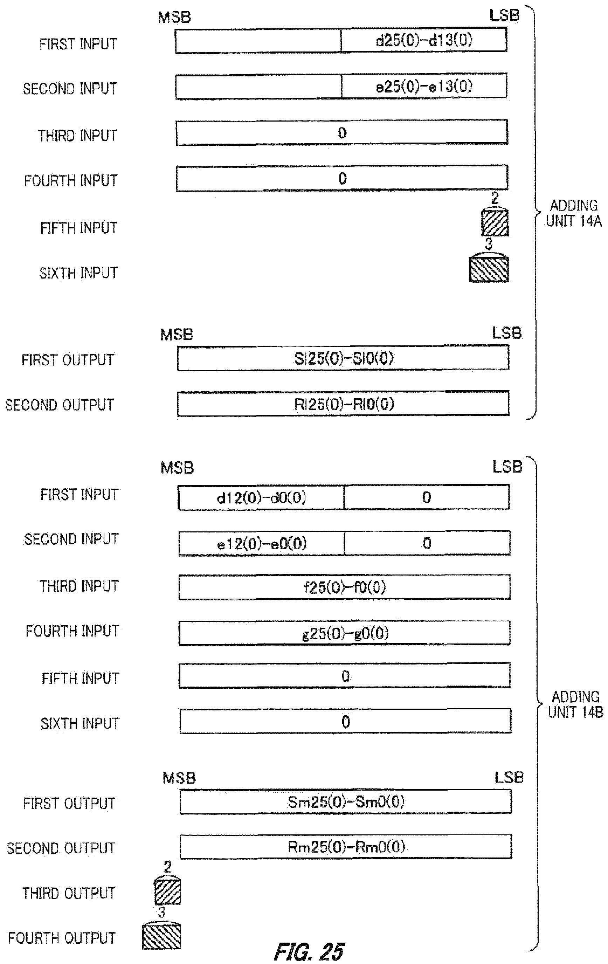

Fig. 25 shows the inputs and outputs of the adding units 14a and 14b in the first cycle, in the single-precision calculation mode of the third modification.

Compared to the inputs and outputs of the adding unit 4a in the second modification, the inputs and outputs of the adding unit 14a are divided such that the third input is divided into a third input of the sum signal and a fourth input of the carry signal, the fourth input is divided into a fifth input of the sum signal and a sixth input of the carry signal, and the output is divided into a first output of the sum signal and a second output of the carry signal. The adding unit 14a receives the 26 bits (all bits are 0) from the shifter 17a at all 26 bit positions of the third input. The adding unit 14a receives the 26 bits (all bits are 0) from the shifter 27a at all 26 bit positions of the fourth input. The adding unit 14a receives the high-order 2 bits of a sum signal SM (28 bits), which is an addition result of the adding unit 14b, at the low-order 2 bit positions of the fifth input. The adding unit 14a receives the high-order 3 bits of a carry signal RM (29 bits), which is an addition result of the adding unit 14b, at the low-order 3 bit positions of the sixth input.

The low-order 26 bits {Sl25(0)-Sl0(0)} in the sum signal SL(0), which is an addition result of the adding unit 14a, are transmitted to the register 15a, as the first output. The low-order 26 bits {Rl25(0)-Rl0(0)} in the carry signal RL(0), which is an addition result of the adding unit 14a, are transmitted to the register 25a, as the second output.

Compared to the inputs and outputs of the adding unit 4b in the second modification, the inputs and output of the adding unit 14b are divided such that the fifth input is divided into a fifth input of the sum signal and a sixth input of the carry signal, the first output is divided into a first output of the sum signal and a second output of the carry signal, and the second output is divided into a third output of the sum signal and a fourth output of the carry signal. The adding unit 14b receives the 26 bits (all bits are 0) from the shifter 17b at all s26 bit positions of the fifth input. The adding unit 14b receives the 26 bits (all bits are 0) from the shifter 27b at all 26 bit positions of the sixth input.

The low-order 26 bits {Sm25(0)-Sm0(0)} in the sum signal SM(0), which is an addition result of the adding unit 14b, are transmitted to the register 15b, as the first output. The high-order 2 bits in the sum signal SM(0), which is an addition result of the adding unit 14b, are transmitted to the low-order 2 bit positions of the fifth input of the adding unit 14a, as the third output. The low-order 26 bits {Rm25(0)-Rm0(0)} in the carry signal RM(0), which is an addition result of the adding unit 14b, are transmitted to the register 25b, as the second output. The high-order 3 bits in the carry signal RM(0), which is an addition result of the adding unit 14b, are transmitted to the low-order 3 bit positions of the sixth input of the adding unit 14a, as the fourth output.

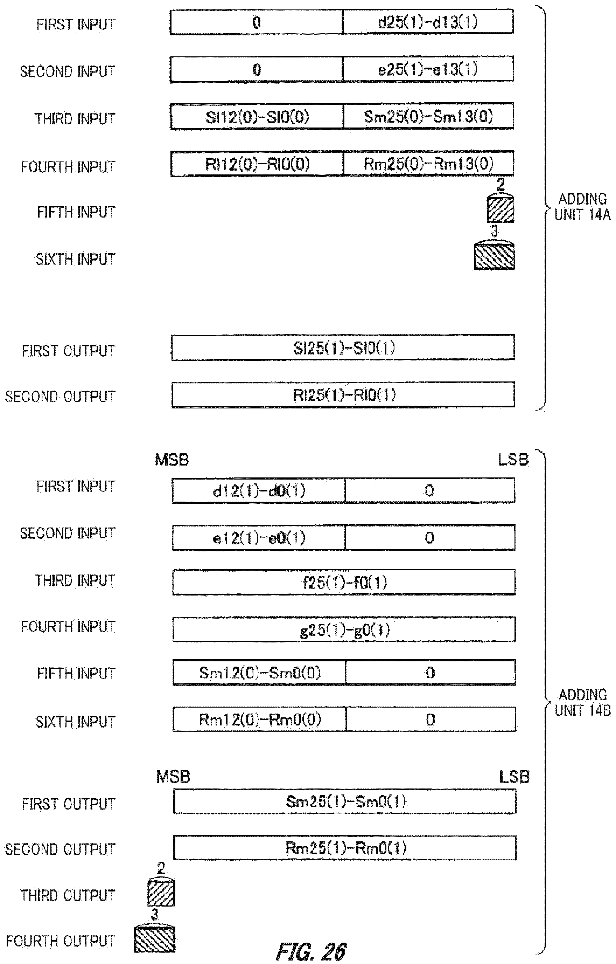

Fig. 26 shows the inputs and outputs of the adding units 14a and 14b in the second cycle, in the single-precision mode of the third modification. The input sources of the signals for the adding units 14a and 14b are similar to those in the first cycle.

The shifter 17a shifts the 26 bits {Sl25(0)-Sl0(0)} held in the register 15a by 13 bits toward the high-order side. The shifter 17b shifts the 26 bits {Sm25(0)-Sm0(0)} held in the register 15b by 13 bits toward the high-order side, and transmits the 13 bits {Sm25(0)-Sm13(0)} that overflow from the shifter 17b to the low-order 13 bit positions of the shifter 17a. The shifter 27a shifts the 26 bits {Rl25(0)-Rl0(0)} held in the register 25a by 13 bits toward the high-order side. The shifter 27b shifts the 26 bits {Rm25(0)-Rm0(0)} held in the register 25b by 13 bits toward the high-order side, and transmits the 13 bits {Rm25(0)-Rm13(0)} that overflow from the shifter 27b to the low-order 13 bit positions of the shifter 27a.

The adding unit 14a receives the 26 bits {high-order 13 bits Sl12(0)-Sl0(0) and low-order 13 bits Sm25(0)-Sm13(0)} from the shifter 17a at all 26 bit positions of the third input. The adding unit 14a receives the 26 bits {high-order 13 bits Rl12(0)-Rl0(0) and low-order 13 bits Rm25(0)-Rm13(0)} from the shifter 27a at all 26 bit positions of the fourth input.

The adding unit 14a receives the high-order 2 bits in the sum signal SM(1) (28 bits), which is an addition result of the adding unit 14b, at the low-order 2 bit positions of the fifth input. The adding unit 14a receives the high-order 3 bits in the carry signal RM(1) (29 bits), which is an addition result of the adding unit 14b, at the low-order 3 bit positions of the sixth input.

The low-order 26 bits {Sl25(1)-Sl0(1)} in the sum signal SL(1), which is an addition result of the adding unit 14a, are transmitted to the register 15a. The low-order 26 bits {Rl25(1)-Rl0(1)} in the carry signal RL(1), which is an addition result of the adding unit 14a, are transmitted to the register 25a.

The adding unit 14b receives the 26 bits {high-order 13 bits Sm12(0)-Sm0(0) and low-order 13 bits that are all 0} from the shifter 17b at all 26 bit positions of the fifth input. The adding unit 14b receives the 26 bits {high-order 13 bits Rm12(0)-Rm0(0) and low-order 13 bits that are all 0} from the shifter 27b at all 26 bit positions of the sixth input.

The low-order 26 bits {Sm25(1)-Sm0(1)} in the sum signal SM(1), which is an addition result of the adding unit 14b, are transmitted to the register 15b, as the first output. The high-order 2 bits in the sum signal SM(1), which is an addition result of the adding unit 14b, are transmitted to the low-order 2 bit positions of the fifth input of the adding unit 14a, as the third output. The low-order 26 bits {Rm25(1)-Rm0(1)} in the carry signal RM(1), which is an addition result of the adding unit 14b, are transmitted to the register 25b, as the second output. The high-order 3 bits in the carry signal RM(1), which is an addition result of the adding unit 14b, are transmitted to the low-order 3 bit positions of the sixth input of the adding unit 14a, as the fourth output.

The second connection switching unit 130 outputs each piece of data in the registers 15a to 15d and 25a to 25d to any one of the adding units 16a to 16d, after the second cycle has ended.

The sum signal {Sl25(1)-Sl0(1)} held in the register 15a and the carry signal {Rl25(1)-Rl0(1)} held in the register 25a are transmitted to the adding unit 16a. The adding unit 16a performs addition and outputs the high-order 26 bits C10 of the first product C1 to the output terminal OP1. In the same manner, the adding unit 16b outputs the low-order 26 bits C11 of the first product C1 to the output terminal OP2. Here, the adding unit 16b may supply the carry that accompanies this addition to the adding unit 16a, and the adding unit 16a may perform the addition described above while including this carry.

### (Double-Precision Calculation Mode)

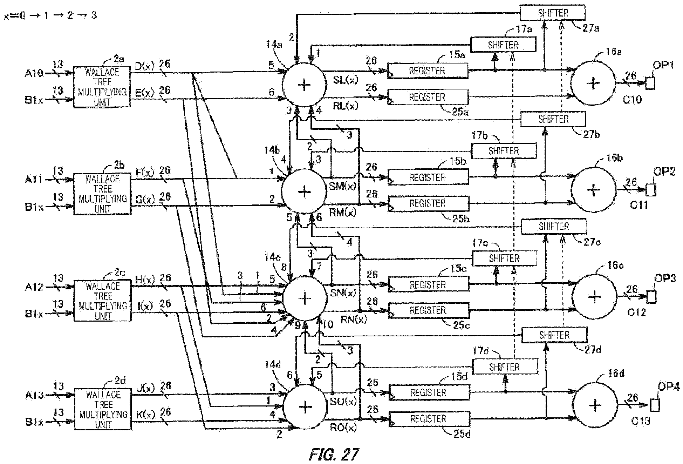

Fig. 27 describes the operation of the arithmetic operation device 101 of the third modification in the double-precision calculation mode, while focusing on differences with respect to the second modification.

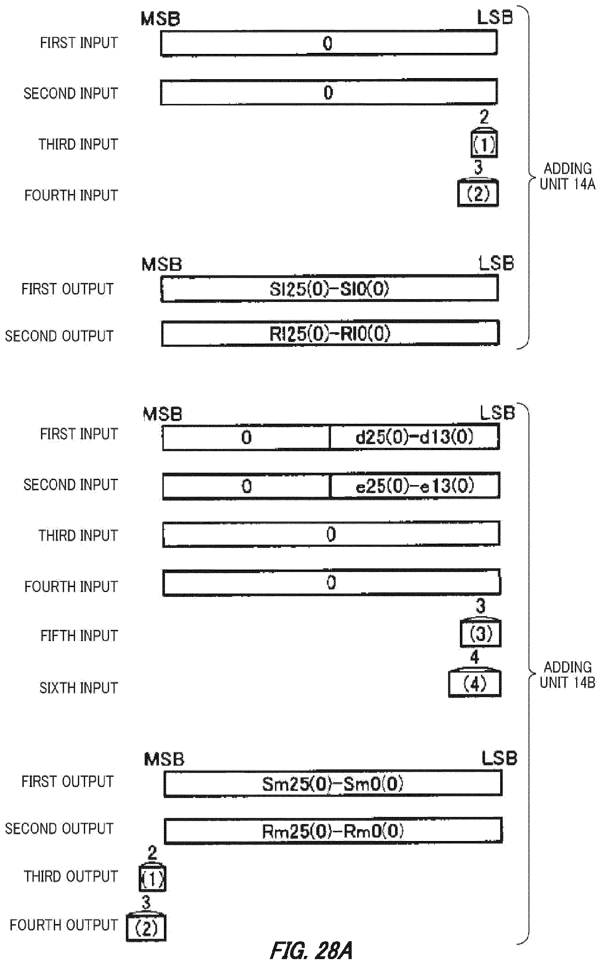

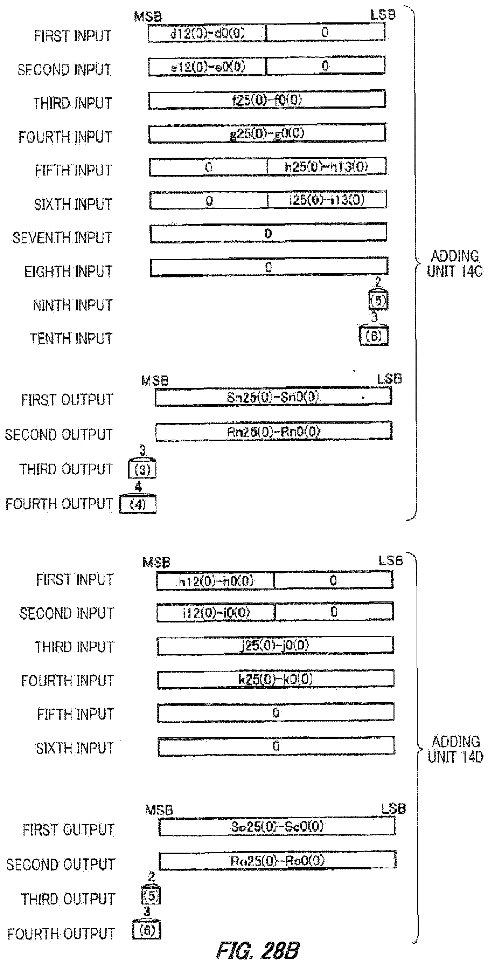

Figs. 28A and 28B show the inputs and outputs of the adding units 14a to 14d in the first cycle, in the double-precision calculation mode of the third modification.

In accordance with the registers 5a to 5d of the second modification being divided into the registers 15a to 15d for the sum signal and the registers 25a to 25d for the carry signal, the inputs from the shifters 7a to 7d to the adding units 4a to 4d in the second modification are divided into inputs of the sum signal from the shifters 17a to 17d to the adding units 14a to 14d and inputs of the carry signal from the shifters 27a to 27d to the adding units 14a to 14d. Furthermore, in accordance with the adding units 14a to 14d being CSAs, the carries from low-order digits are divided into carries from the sum signal and carries from the carry signal. Yet further, the outputs of the adding units 4a to 4d are divided into sum signals and carry signals. Aside from these differences, the inputs and outputs of the adding units 14a to 14d shown in Figs. 28A and 28B are similar to the inputs and outputs of the adding units 4a to 4d shown in Fig. 17.

The adding unit 14a receives the 26 bits (all bits are 0) from the shifter 17a at all 26 bit positions of the first input. The adding unit 14a receives the 26 bits (all bits are 0) from the shifter 27a at all 26 bit positions of the second input. The adding unit 14a receives the high-order 2 bits in the sum signal SM(0) (28 bits), which is an addition result of the adding unit 14b, at the low-order 2 bit positions of the third input. The adding unit 14a receives the high-order 3 bits in the carry signal RM(0) (29 bits), which is an addition result of the adding unit 14b, at the low-order 3 bit positions of the fourth input.

The low-order 26 bits {Sl25(0)-Sl0(0)} in the sum signal SL(0), which is an addition result of the adding unit 14a, are transmitted to the register 15a. The low-order 26 bits {Rl25(0)-Rl0(0)} in the carry signal RL(0), which is an addition result of the adding unit 14a, are transmitted to the register 25a.

The adding unit 14b receives the 26 bits (all bits are 0) from the shifter 17b at all 26 bit positions of the third input. The adding unit 14b receives the 26 bits (all bits are 0) from the shifter 27b at all 26 bit positions of the fourth input. The adding unit 14b receives the high-order 3 bits in the sum signal SN(0) (29 bits), which is an addition result of the adding unit 14c, at the low-order 3 bit positions of the fifth input. The adding unit 14b receives the high-order 4 bits in the carry signal RN(0) (30 bits), which is an addition result of the adding unit 14c, at the low-order 4 bit positions of the sixth input.

The low-order 26 bits {Sm25(0)-Sm0(0)} in the sum signal SM(0), which is an addition result of the adding unit 14b, are transmitted to the register 15b, as the first output. The high-order 2 bits in the sum signal SM(0), which is an addition result of the adding unit 14b, are transmitted to the low-order 2 bit positions of the third input of the adding unit 14a, as the third output. The low-order 26 bits {Rm25(0)-Rm0(0)} in the carry signal RM(0), which is an addition result of the adding unit 14b, are transmitted to the register 15b, as the second output. The high-order 3 bits in the carry signal RM(0), which is an addition result of the adding unit 14b, are transmitted to the low-order 3 bit positions of the fourth input of the adding unit 14a, as the fourth output.

The adding unit 14c receives the 26 bits (all bits are 0) from the shifter 17c at all 26 bit positions of the seventh input. The adding unit 14c receives the 26 bits (all bits are 0) from the shifter 27c at all 26 bit positions of the eighth input. The adding unit 14c receives the high-order two bits in the sum signal SO(0) (28 bits), which is an addition result of the adding unit 14d, at the low-order two bit positions of the ninth input. The adding unit 14c receives the high-order 3 bits in the carry signal RO(0) (29 bits), which is an addition result of the adding unit 14d, at the low-order 3 bit positions of the tenth input.

The low-order 26 bits {Sn25(0)-Sn0(0)} in the sum signal SN(0), which is an addition result of the adding unit 14c, are transmitted to the register 15c, as the first output. The high-order 3 bits in the sum signal SN(0), which is an addition result of the adding unit 14c, are transmitted to the low-order 3 bit positions of the fifth input of the adding unit 14b, as the third output. The low-order 26 bits {Rn25(0)-Rn0(0)} in the carry signal RN(0), which is an addition result of the adding unit 14c, are transmitted to the register 25c, as the second output. The high-order 4 bits in the carry signal RN(0), which is an addition result of the adding unit 14c, are transmitted to the low-order 4 bit positions of the sixth input of the adding unit 14b, as the fourth output.

The adding unit 14d receives the 26 bits (all bits are 0) from the shifter 17d at all 26 bit positions of the fifth input. The adding unit 14d receives the 26 bits (all bits are 0) from the shifter 27d at all 26 bit positions of the fifth input.

The low-order 26 bits {o25(0)-o0(0)} in the sum signal O(0), which is an addition result of the adding unit 14d, are transmitted to the register 15d, as the first output. The high-order 2 bits in the sum signal O(0), which is an addition result of the adding unit 14d, are transmitted to the low-order 2 bit positions of the eighth input of the adding unit 14c, as the second output.

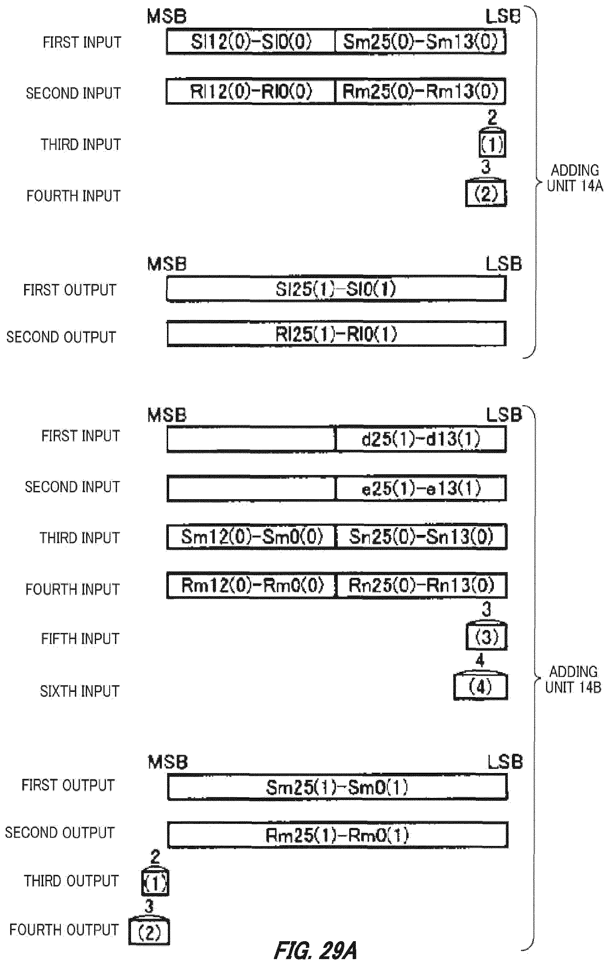

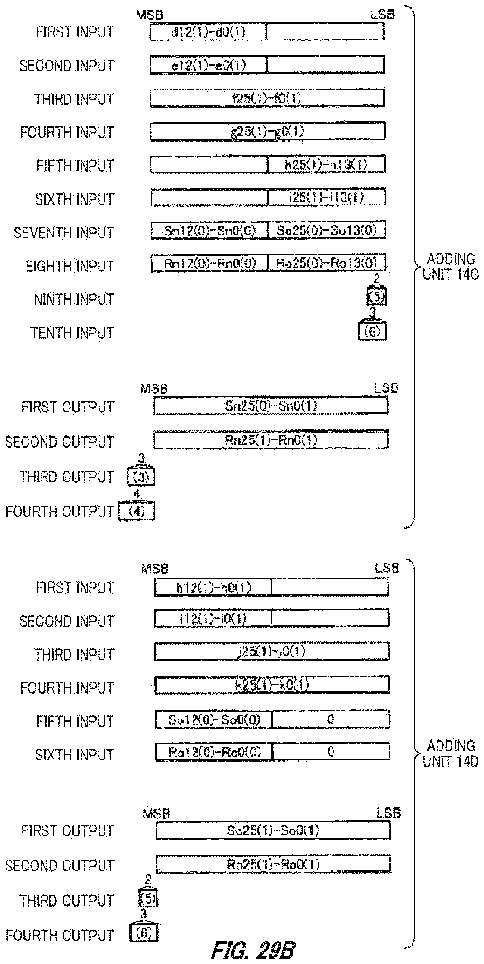

Figs. 29A and 29B show the inputs and outputs of the adding units 14a to 14d in the second cycle, in the double-precision calculation mode of the third modification. The input sources of the signals for the adding units 14a and 14b are similar to those in the first cycle.

The shifter 17a shifts the 26 bits {Sl25(0)-Sl0(0)} held in the register 15a by 13 bits toward the high-order side. The shifter 17b shifts the 26 bits {Sm25(0)-Sm0(0)} held in the register 15b by 13 bits toward the high-order side, and transmits the 13 bits {Sm25(0)-Sm13(0)} that overflow from the shifter 17b to the low-order 13 bit positions of the shifter 17a. The shifter 27a shifts the 26 bits {Rl25(0)-Rl0(0)} held in the register 25a by 13 bits toward the high-order side. The shifter 27b shifts the 26 bits {Rm25(0)-Rm0(0)} held in the register 25b by 13 bits toward the high-order side, and transmits the 13 bits {Rm25(0)-Rm13(0)} that overflow from the shifter 27b to the low-order 13 bit positions of the shifter 27a.

The adding unit 14a receives the 26 bits {high-order 13 bits Sl12(0)-Sl0(0) and low-order 13 bits Sm25(0)-Sm13(0)} from the shifter 17a at all 26 bit positions of the first input. The adding unit 14a receives the 26 bits {high-order 13 bits Rl12(0)-Rl0(0) and low-order 13 bits Rm25(0)-Rml3(0)} from the shifter 27a at all 26 bit positions of the second input. The adding unit 14a receives the high-order 2 bits in the sum signal SM(1) (28 bits), which is an addition result of the adding unit 14b, at the low-order 2 bit positions of the third input. The adding unit 14a receives the high-order 3 bits in the carry signal RM(1) (29 bits), which is an addition result of the adding unit 14b, at the low-order 3 bit positions of the fourth input.

The low-order 26 bits {Sl25(1)-Sl0(1)} in the sum signal SL(1), which is an addition result of the adding unit 14a, are transmitted to the register 15a. The low-order 26 bits {Rl25(1)-Rl0(1)} in the carry signal RL(1), which is an addition result of the adding unit 14a, are transmitted to the register 25a.

The shifter 17c shifts the 26 bits {Sn25(0)-Sn0(0)} held in the register 15c by 13 bits toward the high-order side, and transmits the 13 bits {Sn25(0)-Sn13(0)} that overflow from the shifter 17c to the low-order 13 bit positions of the shifter 17b. The shifter 27c shifts the 26 bits {Rn25(0)-Rn0(0)} held in the register 25c by 13 bits toward the high-order side, and transmits the 13 bits {Rn25(0)-Rn13(0)} that overflow from the shifter 27c to the low-order 13 bit positions of the shifter 27b.

The adding unit 14b receives the 26 bits {high-order 13 bits Sm12(0)-Sm0(0) and low-order 13 bits Sn25(0)-Sn13(0)} from the shifter 17b at all 26 bit positions of the third input. The adding unit 14b receives the 26 bits {high-order 13 bits Rm12(0)-Rm0(0) and low-order 13 bits Rn25(0)-Rn13(0)} from the shifter 27b at all 26 bit positions of the fourth input. The adding unit 14b receives the high-order 3 bits in the sum signal SN(1) (29 bits), which is an addition result of the adding unit 14c, at the low-order 3 bit positions of the fifth input. The adding unit 14b receives the high-order 4 bits in the carry signal RN(1) (30 bits), which is an addition result of the adding unit 14c, at the low-order 4 bit positions of the sixth input.

The low-order 26 bits {Sm25(1)-Sm0(1)} in the sum signal SM(1), which is an addition result of the adding unit 14b, are transmitted to the register 15b, as the first output. The high-order 2 bits in the sum signal SM(1), which is an addition result of the adding unit 14b, are transmitted to the low-order 2 bit positions of the third input of the adding unit 14a, as the third output. The low-order 26 bits {Rm25(1)-Rm0(1)} in the carry signal RM(1), which is an addition result of the adding unit 14b, are transmitted to the register 25b, as the second output. The high-order 3 bits in the carry signal RM(1), which is an addition result of the adding unit 14b, are transmitted to the low-order 3 bit positions of the fourth input of the adding unit 14a, as the fourth output.

The shifter 17d shifts the 26 bits {So25(0)-So0(0)} held in the register 15d by 13 bits toward the high-order side, and transmits the 13 bits {So25(0)-So13(0)} that overflow from the shifter 17d to the low-order 13 bit positions of the shifter 17c. The shifter 27d shifts the 26 bits {Ro25(0)-Ro0(0)} held in the register 25d by 13 bits toward the high-order side, and transmits the 13 bits {Ro25(0)-Ro13(0)} that overflow from the shifter 27d to the low-order 13 bit positions of the shifter 27c.

The adding unit 14c receives the 26 bits {high-order 13 bits Sn12(0)-Sn0(0) and low-order 13 bits So25(0)-So13(0)} from the shifter 17c at all 26 bit positions of the seventh input. The adding unit 14c receives the 26 bits {high-order 13 bits Rn12(0)-Rn0(0) and low-order 13 bits Ro25(0)-Ro13(0)} from the shifter 27c at all 26 bit positions of the eighth input. The adding unit 14c receives the high-order 2 bits in the sum signal SO(1) (28 bits), which is an addition result of the adding unit 14d, at the low-order 2 bit positions of the ninth input. The adding unit 14c receives the high-order 3 bits in the carry signal RO(1) (29 bits), which is an addition result of the adding unit 14d, at the low-order 3 bit positions of the tenth input.

The low-order 26 bits {Sn25(1)-Sn0(1)} in the sum signal SN(1), which is an addition result of the adding unit 14c, are transmitted to the register 15c, as the first output. The high-order 3 bits in the sum signal SN(1), which is an addition result of the adding unit 14c, are transmitted to the low-order 3 bit positions of the fifth input of the adding unit 14b, as the third output. The low-order 26 bits {Rn25(1)-Rn0(1)} in the carry signal RN(1), which is an addition result of the adding unit 14c, are transmitted to the register 25c, as the second output. The high-order 4 bits in the carry signal RN(1), which is an addition result of the adding unit 14c, are transmitted to the low-order 4 bit positions of the sixth input of the adding unit 14b, as the fourth output.

The adding unit 14d receives the 26 bits {high-order 13 bits So12(0)-So0(0) and low-order 13 bits that are all 0} from the shifter 17d at all 26 bit positions of the fifth input. The adding unit 14d receives the 26 bits {high-order 13 bits Ro12(0)-Ro0(0) and low-order 13 bits that are all 0} from the shifter 27d at all 26 bit positions of the sixth input.

The low-order 26 bits {So25(1)-So0(1)} in the sum signal SO(1), which is an addition result of the adding unit 14d, are transmitted to the register 15d, as the first output. The high-order 2 bits in the sum signal SO(1), which is an addition result of the adding unit 14d, are transmitted to the low-order 2 bit positions of the ninth input of the adding unit 14c, as the third output. The low-order 26 bits {Ro25(1)-Ro0(1)} in the carry signal RO(1), which is an addition result of the adding unit 14d, are transmitted to the register 25d, as the second output. The high-order 3 bits in the carry signal RO(1), which is an addition result of the adding unit 14d, are transmitted to the low-order 3 bit positions of the tenth input of the adding unit 14c, as the fourth output.

The inputs of the Wallace tree multiplying units 2a to 2d in the third and fourth cycles in the double-precision calculation mode are similar to those of the second modification. The calculation procedure from this point in the third and fourth cycles is similar to the calculation procedure in the second cycle, and therefore this description is not repeated.

The second connection switching unit 130 outputs each piece of data in the registers 15a to 15d and 25a to 25d to any one of the adding units 16a to 16d, after the fourth cycle has ended.

The sum signal {Sl25(3)-Sl0(3)} held in the register 15a and the carry signal {Rl25(3)-Rl0(3)} held in the register 25a are transmitted to the adding unit 16a. The adding unit 16a performs addition and outputs the first bit group C10 of the product C1 to the output terminal OP1. In the same manner, the adding units 16b to 16d output the second to fourth bit groups C11 to C13 of the product C1 to the output terminals OP2 to OP4. Here, the adding units 16b to 16d may supply the carry that accompanies this addition to the adding units 16a to 16c on the high order side, and the adding units 16a to 16c on the high order side may perform the addition described above while including this carry.

The following describes an example of a specific configuration of the adding units 14a to 14d. In the half-precision calculation mode, data is not input to the adding units 14a to 14d. That is, the sum signals D, F, and H and the carry signals E, G, and I output from the Wallace tree multiplying units 2a to 2d are transmitted to the adding units 16a to 16d while bypassing the adding units 14a to 14d. In the single-precision calculation mode, the adding units 14a to 14d perform carry-signal hold addition of 6-input 2-output, 6-input 2-output + 2-carry-signal-output, 6-input 2-output, and 6-input 2-output + 2-carry-signal-output in the stated order. In the double-precision calculation mode, the adding units 14a to 14d perform carry-signal hold addition of 4-input 2-output, 6-input 2-output + 2-carry-signal-output, 10-input 2-output + 2-carry-signal-output, and 6-input 2-output + 2-carry-signal-output in the stated order.

The adding unit 14a includes four CSAs. In the single-precision calculation mode, the adding unit 14a performs carry-signal hold addition using the four CSAs, and in the double-precision calculation mode, the adding unit 14a performs carry-signal hold addition using two CSAs.

The adding unit 14b includes four CSAs. In the single-precision calculation mode and the double-precision calculation mode, the adding unit 14b performs carry-signal hold addition using the four CSAs.

The adding unit 14c includes eight CSAs. In the single-precision calculation mode, the adding unit 14c performs carry-signal hold addition using four CSAs, and in the double-precision calculation mode, the adding unit 14c performs carry-signal hold addition using the eight CSAs.

The adding unit 14d includes four CSAs. In the single-precision calculation mode and the double-precision calculation mode, the adding unit 14d performs carry-signal hold addition using the four CSAs.

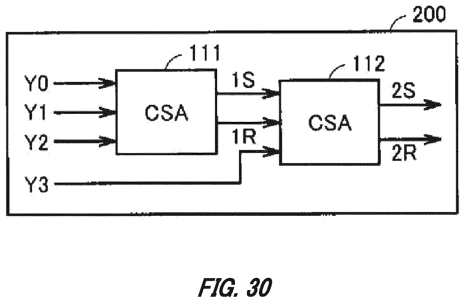

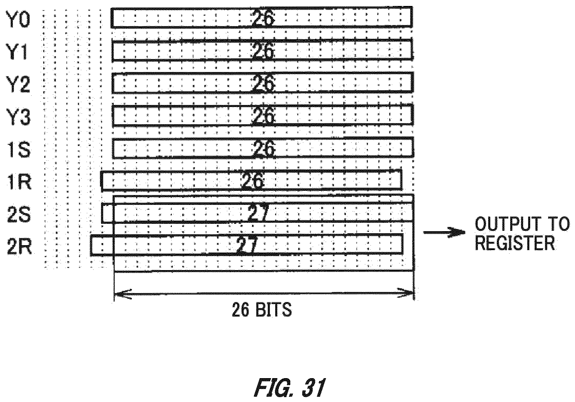

Fig. 30 shows a configuration of an adding unit 200 that performs carry-signal hold addition using two CSAs. The configuration of this adding unit 200 is the configuration of the adding unit 14a during the double-precision calculation mode. Fig. 31 shows input data, intermediate data, and output data of the adding unit 200.

Four pieces of data Y0, Y1, Y2, and Y3 are input to this adding unit 200. The CSA 111 performs carry-signal hold addition of Y0, Y1, and Y2, and outputs a sum signal 1S and a carry signal 1R. The CSA 112 performs carry-signal hold addition of Y3, the sum signal 1S, and the carry signal 1R, and outputs a sum signal 2S and a carry signal 2R.

The low-order 26 bits of the sum signal 2S are output to one of the registers, and the low-order 26 bits of the carry signal 2R are output to the other register.

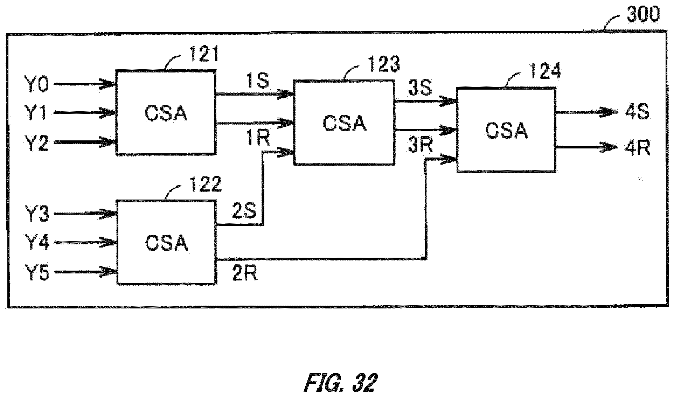

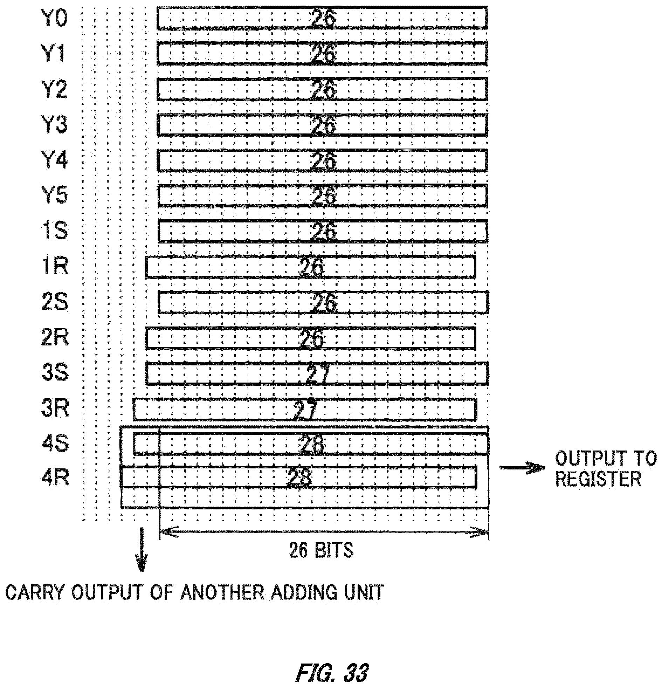

Fig. 32 shows a configuration of an adding unit 300 that performs carry-signal hold addition using four CSAs. The configuration of this adding unit 300 is a configuration of the adding units 14a to 14d during the single-precision calculation mode and the configuration of the adding units 14b and 14d during the double-precision calculation mode. Fig. 33 shows input data, intermediate data, and output data of the adding unit 300.

Six pieces of data Y0, Y1, Y2, Y3, Y4, and Y5 are input to this adding unit 300.

The CSA 121 performs carry-signal hold addition of Y0, Y1, and Y2, and outputs a sum signal 1S and a carry signal 1R. The CSA 122 performs carry-signal hold addition of Y3, Y4, and Y5, and outputs a sum signal 2S and a carry signal 2R. The CSA 123 performs carry-signal hold addition of the sum signal 1S, the carry signal 1R, and the sum signal 2S, and outputs a sum signal 3S and a carry signal 3R. The CSA 124 performs carry-signal hold addition of the sum signal 3S, the carry signal 3R, and the carry signal 2R, and outputs a sum signal 4S and a carry signal 4R.

The low-order 26 bits of the sum signal 4S are output to one of the registers, and the low-order 26 bits of the carry signal 4R are output to the other register. If a carry signal is to be output, the high-order 2 bits of the sum signal 4S are output as a carry signal to another adding unit, and the high-order 3 bits of the carry signal 4R are output as a carry signal to another adding unit.

At the timing that the sum signals 1S and 2S and the carry signals 1R and 2R are generated, 2-bit or 3-bit carry bits may be generated, according to the patterns of these signals, and output from the adding unit 300 to another adding unit.

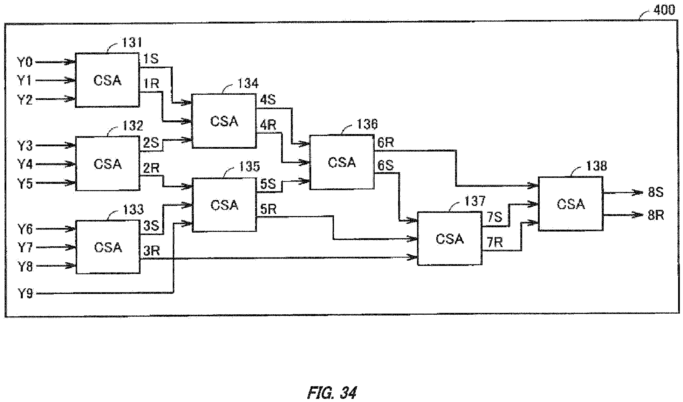

Fig. 34 shows a configuration of an adding unit 400 that performs carry-signal hold addition using eight CSAs. The configuration of this adding unit 400 is a configuration of the adding unit 14c during the double-precision calculation mode. Ten pieces of data Y0 to Y9 are input to this adding unit 400.

The CSA 131 performs carry-signal hold addition of Y0, Y1, and Y2, and outputs a sum signal 1S and a carry signal 1R. The CSA 132 performs carry-signal hold addition of Y3, Y4, and Y5, and outputs a sum signal 2S and a carry signal 2R. The CSA 133 performs carry-signal hold addition of Y6, Y7, and Y8, and outputs a sum signal 3S and a carry signal 3R.

The CSA 134 performs carry-signal hold addition of the sum signal 1S, the carry signal 1R, and the sum signal 2S, and outputs a sum signal 4S and a carry signal 4R. The CSA 135 performs carry-signal hold addition of the Y9, the carry signal 2R, and the sum signal 3S, and outputs a sum signal 5S and a carry signal 5R. The CSA 136 performs carry-signal hold addition of the sum signal 4S, the carry signal 4R, and the sum signal 5S, and outputs a sum signal 6S and a carry signal 6R. The CSA 137 performs carry-signal hold addition of the sum signal 6S, the carry signal 3R, and the carry signal 5R, and outputs a sum signal 7S and a carry signal 7R. The CSA 138 performs carry-signal hold addition of the carry signal 6R, the sum signal 7S, and the carry signal 7R, and outputs a sum signal 8S and a carry signal 8R.

The low-order 26 bits of the sum signal 8S are output to one of the registers, and the low-order 26 bits of the carry signal 8R are output to the other register. Furthermore, the high-order 3 bits of the sum signal 8S are output as a carry signal to another adding unit, and the high-order 4 bits of the carry signal 8R are output as a carry signal to another adding unit.

According to the arithmetic operation device of the present embodiment, the adding units 14a to 14d output the sum signals and carry signals one stage before the addition result, and the adding units 16a to 16d only need to perform the addition once in two cycles for single-precision calculations and perform the addition once in four cycles for double-precision calculations. Accordingly, in the present embodiment, it is possible to increase the operational speed and power efficiency of the overall arithmetic operation device beyond those of the second modification.

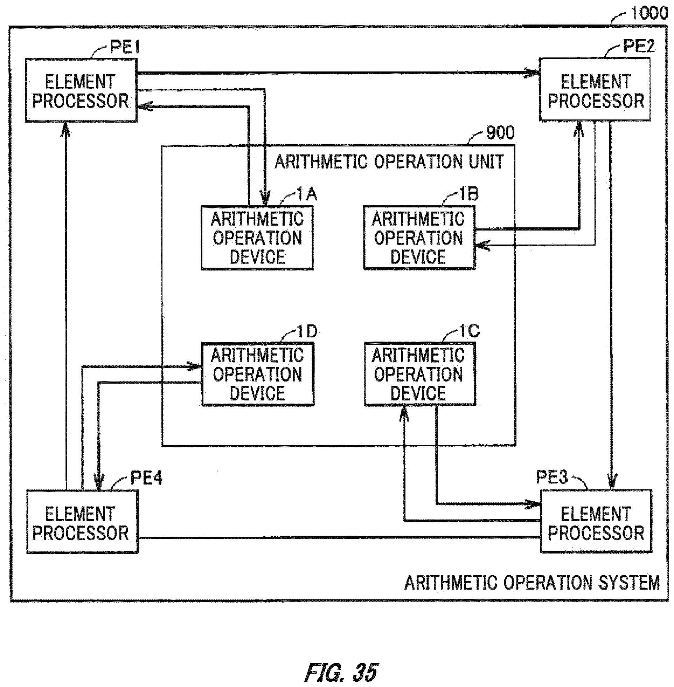

[Fourth Modification] Fig. 35 shows a configuration of an arithmetic operation system 1000 of a fourth modification. This arithmetic operation system 100 includes an arithmetic operation unit 900 and a plurality of element processors PE1 to PE4.

The plurality of element processors PE1 to PE4 use the arithmetic operation unit 900 in a shared manner. When the arithmetic operation system 1000 performs a matrix calculation, the element processors PE1 to PE4 operate cooperatively as a single processor, and when the arithmetic operation system 1000 performs a calculation other than a matrix calculation, the element processors PE1 to PE4 operate as individual processors. Even when the arithmetic operation system 1000 performs a calculation other than a matrix calculation, the element processors PE1 to PE4 may operate as a single processor. In a case where the element processors PE1 to PE4 operate as a single processor, the element processors PE1 to PE4 operate according to one instruction, and the element processors PE 1 to PE4 can be treated as performing an SIMD operation.

The element processors PE1 to PE4 are ring-coupled. Specifically, the element processor PE1 and the element processor PE2 are connected by a data bus, the element processor PE2 and the element processor PE3 are connected by a data bus, the element processor PE3 and the element processor PE4 are connected by a data bus, and the element processor PE4 and the element processor PE1 are connected by a data bus. Processor IDs (00, 01, 10, 11) enabling the processor elements to be uniquely identified are set for the element processors PE1 to PE4.

A memory space is set in the arithmetic operation system 1000. A memory address of the memory space includes the processor IDs. For example, the low-order two bits of the memory address may correspond to the processor ID. Each of the plurality of element processors PE1 to PE4 is assigned a memory space corresponding to a 10-bit address. Accordingly, the memory space of the arithmetic operation system 1000 is expanded to 12 bits. In other words, the memory space of the arithmetic operation system 1000 is divided into four equal portions, and a memory region indicated by each memory address is accessed by the element processor indicated by the processor ID included in this memory address.

Each of the element processors PE1 to PE4 can access the memory region (overseen region) indicated by the memory address including the processor ID of this element processor, but cannot access the memory regions (non-overseen regions) indicated by memory addresses including processor ID different from the processor ID of this element processor. Each of the element processors PE1 to PE4 performs data transfer (circular shifting) to other processors in order, via the ring-coupling. In this way, each of the element processors PE1 to PE4 can read the data of the non-overseen regions or write data to the non-overseen regions. Each of the element processors PE1 to PE4 holds, in the region indicated by the memory address, input data that is a calculation target for the arithmetic operation unit 900 and output data that is a calculation result of the arithmetic operation unit 900.

The arithmetic operation unit 900 can perform a plurality of floating point calculations in parallel. The arithmetic operation unit 900 can perform calculations for a DNN (Deep Neural Network) and a CNN (Convoluted Neural Network), for example.

The arithmetic operation unit 900 includes a plurality of arithmetic operation devices 1A to 1D. Each of the arithmetic operation devices 1A to 1D is the arithmetic operation device 405 described in the embodiment, the arithmetic operation device 405 described in the first modification, the arithmetic operation device 1 described in the second modification, or the arithmetic operation device 101 described in the third modification.

Each of the arithmetic operation devices 1A to 1D is an apparatus that performs a portion of the calculations of the arithmetic operation unit 900. The element processor PE1 is capable of accessing a register of the arithmetic operation device 1A. The element processor PE2 is capable of accessing a register of the arithmetic operation device 1B. The element processor PE3 is capable of accessing a register of the arithmetic operation device 1C. The element processor PE4 is capable of accessing a register of the arithmetic operation device ID.

### (Other Modifications)

The present invention is not limited to the embodiment described above, and also includes modifications such as described below, for example.
(1) In the embodiment described above, the arithmetic operation device performs the multiplication (A^{∗}B), but the arithmetic operation device is also capable of performing A^{∗}B+C. To realize this, in the case of single-precision calculation, the initial values of the third inputs of the adding units 4a, 4c, 14a, and 14c should be changed from 0 to C, and in the case of double-precision calculation, the initial values of the first inputs of the adding units 4a and 14a should be changed from 0 to C. In the case of half-precision as well, C should be supplied to the unused input ports of the adding units 4a to 4d and 14a to 14d.
(2) In the embodiment described above, arithmetic circuitry for the mantissa part of data in a floating-point format is shown, but the present invention can be applied as arithmetic circuitry for data in a fixed-point format and block floating-point format. Furthermore, the present invention can be applied as arithmetic circuitry for data in which these types of calculation data (floating-point format, fixed-point format, and block floating-point format) are mixed.

The embodiments disclosed here are to be considered as illustrative in all points and not restrictive. The scope of the present invention is shown not by the above description but by the claims, and is intended to include all modifications within the meaning and scope equivalent to the claims.

### EXPLANATION OF REFERENCES

1, 1A-1D, 101: arithmetic operation device, 2a-2d: Wallace tree multiplying unit, 4a-4d, 14a-14d, 16a-16d, 200, 300, 400: adding unit, 5a-5d, 15a-15d, 25a-25d: register, 6a-6d, 7a-7d, 17a-17d, 27a-27d: shifter, 9b-9d, 151b-151d, 161b-161d: switch, 20, 120: first connection switching unit, 30, 130: second connection switching unit, 51-61, 111, 112, 121-124, 131-138: CSA, 79: input generating unit, 900: arithmetic operation unit, 1000: arithmetic operation system, PE1-PE4: element processor, OP1-OP4: output terminal, 405: arithmetic operation device, 410: multiplying section, 420-1-420-4: multiplying unit, 430: adding section, 440-1-440-4: adding unit, 450-1-450-4: intermediate register, 460: mode selecting section, 470: first connection switching unit, 480: second connection switching unit, 540: adding unit, 542: first adding element, 544: second adding element, 550: intermediate register.

## Claims

1. An arithmetic operation device for performing multiplication with variable precision, comprising:
a multiplying section that includes a plurality of multiplying units, which are divided and assigned to each of one or more groups such that each group includes one or more of the multiplying units according to a calculation precision mode, wherein each multiplying unit in each group multiplies together an individual multiplier, which is a digit range of at least a portion of a multiplier for the group, and an individual multiplicand, which is a digit range of at least a portion of a multiplicand for the group, according to the calculation precision mode;
an adding section that includes a plurality of adding units, which are divided and assigned to each of the one or more groups such that each group includes one or more of the adding units according to the calculation precision mode, wherein the one or more adding units assigned to each group add together each multiplication result obtained by each multiplying unit assigned to the group and output a product of the multiplier and the multiplicand; and
a first connection switching unit for, for each of the one or more groups, inputting each multiplication result obtained by each multiplying unit to a digit position to which the multiplication result is to be added in the one or more adding units, according to the calculation precision mode.

2. The arithmetic operation device according to Claim 1, wherein
each of the plurality of multiplying units multiplies together the individual multiplier and the individual multiplicand, and outputs the multiplication result that includes sum data of each digit and carry data of each digit.

3. The arithmetic operation device according to Claim 1 or 2, wherein
each of the plurality of multiplying units multiplies together the individual multiplier and the individual multiplicand, which each have a 1-unit bit length, and outputs the multiplication result having a 2-unit bit length, and
each of the plurality of adding units adds together a plurality of pieces of input data, which each have a 2-unit bit length, and outputs a sum having a 2-unit bit length and, according to the calculation precision mode, a carry to a high-order digit.

4. The arithmetic operation device according to any one of Claims 1 to 3, wherein
in at least one calculation precision mode for multiplying together the multiplier and the multiplicand that each have a unit bit length of 2 or more, for each of the one or more groups:
in each cycle, the one or more multiplying units input the individual multipliers having digit ranges to be processed by each of the plurality of multiplying units in the multiplier and the individual multiplicands selected 1-unit-bit-length at a time in order from the high-order digit side in each cycle in the multiplicand, and output each partial product of the individual multipliers and the individual multiplicands in each cycle, as the multiplication result,
in each cycle, the first connection switching unit shifts each partial product output by the one or more multiplying units and inputs the shifted partial products to the one or more adding units to be added to an intermediate result such that the partial product of the individual multiplier and the individual multiplicand of the digit range on the lowest-order side in the multiplier corresponds to the lowest-order digit range in the one or more adding units, and
the arithmetic operation device further comprises a second connection switching unit for, for each of the one or more groups, in each cycle, shifting the intermediate result by 1 unit bit length toward a high-order side and inputting the shifted intermediate result to the one or more adding units.

5. The arithmetic operation device according to Claim 4, wherein
in at least one calculation precision mode for unit bit lengths of 2 or more, the plurality of multiplying units and the plurality of adding units are assigned to two or more groups, and
the arithmetic operation device, for each of the two or more groups, calculates a product of the multiplier and the multiplicand using a plurality of cycles.

6. The arithmetic operation device according to Claim 4 or 5, wherein
in a calculation precision mode for multiplying together the multiplier and the multiplicand that each have a 1-unit bit length:
the plurality of multiplying units are assigned to the plurality of groups, each of which includes one multiplying unit, and
the multiplying unit assigned to each group multiplies together the multiplier and the multiplicand that each have a 1-unit bit length assigned to the group.

7. The arithmetic operation device according to any one of Claims 4 to 6, wherein
the adding section includes a plurality of intermediate registers that are respectively provided corresponding to each of the plurality of adding units and each hold a digit range corresponding to the respective adding unit in the intermediate result.

8. The arithmetic operation device according to Claim 7, wherein
each of the plurality of adding units includes a first adding element for outputting an addition result that includes sum data of each digit and carry data of each digit,
each of the plurality of intermediate registers holds the sum data and the carry data of a digit range output by the corresponding first adding element in the intermediate result, and
the adding section further includes a plurality of second adding elements, which are respectively provided corresponding to each of the plurality of adding units and are divided and assigned to each of the one or more groups such that each group includes one or more second adding elements according to the calculation precision mode, for adding together the sum data and the carry data output by the one or more first adding elements in each group and outputting the addition result as a product of the multiplier and the multiplicand.

9. An arithmetic operation device for performing multiplication with variable precision, comprising;
a multiplying section that includes a plurality of multiplying units that are each for multiplying together two numbers that each have a 1-unit bit length and outputting a multiplication result that includes sum data of each digit and carry data of each digit;
an adding section that includes a plurality of adding units that are each for adding together at least two pieces of input data including the multiplication result obtained by at least one multiplying unit among the plurality of multiplying units; and
a mode selecting section for selecting, according to a calculation precision mode, a number of divisions for dividing the plurality of multiplying units and the plurality of adding units into each group, each group including one or more multiplying units and one or more adding units and multiplying together a different multiplier and multiplicand, and the number of cycles used to multiply together the multiplier and the multiplicand using the one or more multiplying units and the one or more adding units in the group.

10. The arithmetic operation device according to Claim 9, wherein
the mode selecting section, in a calculation precision mode for multiplying together the multiplier and the multiplicand that each have an n-bit unit length (n is a natural number), divides the plurality of multiplying units and the plurality of adding units into at least one of the groups that include n multiplying units and n adding units respectively,
the n multiplying units in each of the at least one group multiply together each of n individual multipliers, which each have a digit range of 1 unit bit length included in the multiplier of each group, and each of n individual multiplicands, which each have a digit range of 1 unit bit length included in the multiplicand, by n sets per cycle over n cycles, and
the n adding units in each of the at least one group are combined to, over n cycles, continuously add each multiplication result from the n multiplying units of the same group in each cycle to a digit position corresponding to each multiplication result in an intermediate result of the multiplier and the multiplicand.

11. An arithmetic operation system comprising:
an arithmetic operation unit that includes a plurality of arithmetic operation devices, each arithmetic operation device being the arithmetic operation device according to any one of Claims 1 to 10; and
a plurality of processors that share the arithmetic operation unit.
